# EUROPEAN PATENT SPECIFICATION

(11) **EP 4 092 977 B1**
(45) Date of publication and mention of the grant of the patent: **23.07.2025**
(21) Application number: 20921059.0
(22) Date of filing: 27.09.2020
(51) Int. Cl.: H04L 45/033

(54) **ROUTE ATTRIBUTE UPDATE METHOD, NETWORK DEVICE AND SYSTEM**
VERFAHREN ZUR AKTUALISIERUNG VON ROUTENATTRIBUTEN, NETZWERKVORRICHTUNG UND SYSTEM
PROCÉDÉ DE MISE À JOUR D'ATTRIBUT DE ROUTE, DISPOSITIF DE RÉSEAU ET SYSTÈME

(30) Priority: 28.02.2020 CN 202010130433
(43) Date of publication of application: 23.11.2022
(73) Proprietor: Huawei Technologies Co., Ltd., Shenzhen, Guangdong 518129 (CN)
(72) Inventor: WU, Hong, Shenzhen, Guangdong 518129 (CN); CAO, Ruiqing, Shenzhen, Guangdong 518129 (CN); WANG, Haibo, Shenzhen, Guangdong 518129 (CN)
(74) Representative: Pfenning, Meinig & Partner mbB
(86) International application number: PCT/CN2020/118138
(87) International publication number: WO 2021/169278

(56) References cited:
- EP-B1- 3 306 874
- CN-A- 102 082 734
- CN-A- 104 486 228
- CN-A- 106 470 154
- CN-B- 106 059 917
- US-A1- 2015 312 135
- US-A1- 2018 109 450

## Description

### TECHNICAL FIELD

This application relates to the field of data communication, and in particular, to a route attribute update method, a network device, and a system.

### BACKGROUND

The border gateway protocol (border gateway protocol, BGP) is a dynamic routing protocol used between autonomous systems (autonomous systems, ASs). Each AS may include a plurality of network devices. After a BGP connection is established between two network devices that belong to a same AS or between two network devices that belong to different ASs, BGP routes may be notified to each other by using BGP update (update) messages.

In a related technology, when a traffic burst or a fault occurs on a link inside an AS or a link between ASs, operation and maintenance personnel may adjust, in a manual configuration manner, a route attribute of a BGP route advertised by one or more network devices, to adjust a traffic forwarding path.

However, in a solution in the related technology, when the traffic forwarding path is adjusted, the operation and maintenance personnel needs to manually update the route attribute, resulting in low efficiency.

US 2018/ 109405 A1 discusses a set of extensions to enable a BGP to setup and maintain flexible Segment Routed Traffic Engineered (SR-TE) policies, and steering of traffic onto SR-TE paths on a per-prefix basis without deploying the existing complex mechanisms. EP3306874A1 provides a routing control method for that includes: receiving, by a controller, a first BGP routing message, and determining whether to perform incoming-traffic adjustment and control. CN 106 059 917 B describes a routing information processing method and apparatus and proposes that for improving the efficiency of transmitting routing information, current routing information is sent to a BGP neighbor device corresponding to a target neighbor information.

### SUMMARY

For improving the route attribute update efficiency, the present invention proposes route attribute update methods and network devices according to the independent claims. Particular embodiments of the present invention are defined by the dependent claims. This application further provides a route attribute update method, a network device, and a system, to resolve a technical problem of low efficiency of updating a route attribute in a related technology.

According to a first aspect, a route attribute update method is provided. The method includes:
A first network device receives a message used for route policy distribution (route policy distribution, RPD) from a second network device, where the message includes a route policy, the route policy includes a match condition field and an action field, the match condition field carries one or more target features, and the action field carries one or more route attributes. After the first network device obtains a BGP route, if route information of the BGP route matches the one or more target features, the first network device directly updates a route attribute of the BGP route based on the one or more route attributes carried in the action field, where the action field carries one or more of the following route attributes: a community attribute, an extended community attribute, a large community attribute, a next-hop address, a local preference, a peer identifier, and an accumulative interior gateway protocol metric value. The action field at least carries the accumulative interior gateway protocol metric value. The route policy may further comprise a policy type field, the policy type field indicates a policy effectiveness occasion of the route policy, and the policy effectiveness occasion comprises one of the following manners: policy import effectiveness, policy export effectiveness, policy next-hop recursion effectiveness, policy forwarding entry generation effectiveness, and policy BGP route generation effectiveness. The method further comprises: detecting, by the first network device on the policy effectiveness occasion indicated by the policy type field, whether the route information of the BGP route matches the one or more target features.

The first network device may automatically update the route attribute of the BGP route according to the route policy included in the message used for the RPD, and operation and maintenance personnel does not need to manually configure the route attribute. Therefore, route attribute update efficiency is greatly improved, and operation and maintenance costs of a data communication system are reduced. In addition, because the action field of the route policy may carry a plurality of route attributes, the route attribute of the BGP route can be flexibly updated, and requirements of different application scenarios can be met.

Optionally, a manner in which the first network device receives the message may include: receiving the message sent by the second network device, where the message further includes a first community attribute, and the first community attribute indicates not to advertise the message to another network device.

In the solution provided in this application, the second network device may directly send, to the specific first network device, the message carrying the first community attribute, and after receiving the message carrying the first community attribute, the first network device does not spread the message to the another network device.

Optionally, a manner in which the first network device receives the message may further include: receiving the message that is from the second network device and that is sent by a route reflector (route reflector, RR), where the message further includes a first extended community attribute, and the first extended community attribute indicates an identifier of a target network device on which the route policy becomes effective. Correspondingly, the method further includes: if an identifier of the first network device is different from the identifier that is of the target network device and that is indicated by the first extended community attribute, discarding the message; or if an identifier of the first network device matches the identifier that is of the target network device and that is indicated by the first extended community attribute, storing the message.

In the solution provided in this application, the second network device may further advertise the message to the RR, and the message carries the first extended community attribute but does not carry the first community attribute. After receiving the message, the RR may spread the message to the first network device connected to the RR. The first network device may determine, based on the first extended community attribute in the message, to retain or discard the message.

As stated above, the route policy further includes a policy type field, the policy type field indicates a policy effectiveness occasion of the route policy, and the policy effectiveness occasion includes one of the following manners: policy import effectiveness, policy export effectiveness, policy next-hop recursion effectiveness, policy forwarding entry generation effectiveness, and policy BGP route generation effectiveness. The method may further include: detecting, on the policy effectiveness occasion indicated by the policy type field, whether the route information of the BGP route matches the one or more target features carried in the match condition field.

The policy type field indicates the policy effectiveness occasion of the route policy, so that the first network device can detect, on different occasions, whether the route information of the BGP route matches the target feature in the message, to effectively improve route attribute update flexibility.

Optionally, the route attribute update method provided in this application may be used in a route coloring scenario. The one or more target features carried in the match condition field may include a target address prefix. The one or more route attributes carried in the action field may include a second extended community attribute indicating a path color. The BGP route includes an address prefix and a route attribute, and the route attribute of the BGP route includes a next-hop attribute. A process of updating the route attribute of the BGP route may include: adding the second extended community attribute to the BGP route if the address prefix of the BGP route matches the target address prefix.

Correspondingly, the method may further include: receiving a segment routing (segment routing, SR) policy (policy) from the second network device, where the SR policy carries a color identifier, an endpoint identifier, and a segment list; and using the segment list to forward a packet reaching the target address prefix if the endpoint identifier carried in the SR policy matches the next-hop attribute in the BGP route and a path color indicated by the color identifier matches the path color indicated by the second extended community attribute in the BGP route.

Optionally, the first network device may record the segment list into a forwarding table corresponding to the target address prefix. The segment list corresponds to a packet forwarding path. When forwarding a packet based on the forwarding table, the first network device encapsulates the segment list into the packet, to indicate the packet to be forwarded along the forwarding path indicated by the segment list.

Because the first network device may automatically add the second extended community attribute to the BGP route according to the route policy included in the message, the BGP route can be automatically colored, and auto steering efficiency of the SR policy can be greatly improved.

According to a second aspect, a route attribute update method is provided. The method may include: A second network device generates a message used for RPD, and sends the message to a first network device, where the message includes a route policy, the route policy may include a match condition field and an action field, the match condition field carries one or more target features, the action field carries one or more route attributes, the action field carries one or more of the following route attributes: a community attribute, an extended community attribute, a large community attribute, a next-hop address, a local preference, a peer identifier, and an accumulative interior gateway protocol metric value, and the message indicates the first network device to update a route attribute of a BGP route according to the route policy. The action field at least carries the accumulative interior gateway protocol metric value. The route policy may further comprise a policy type field, the policy type field indicates a policy effectiveness occasion of the route policy, and the policy effectiveness occasion comprises one of the following manners: policy import effectiveness, policy export effectiveness, policy next-hop recursion effectiveness, policy forwarding entry generation effectiveness, and policy BGP route generation effectiveness.

The message delivered by the second network device includes the route policy. Therefore, the first network device can automatically update the route attribute of the BGP route according to the route policy, and operation and maintenance personnel does not need to manually configure the route attribute. In this way, route attribute update efficiency is greatly improved, and operation and maintenance costs of a data communication system are reduced. (next paragraph: [0024])

According to a third aspect, a first network device is provided. The first network device includes at least one module, and the at least one module is configured to implement the route attribute update method applied to the first network device according to the foregoing aspects.

According to a fourth aspect, a second network device is provided. The second network device includes at least one module, and the at least one module is configured to implement the route attribute update method applied to the second network device according to the foregoing aspects.

According to a fifth aspect, a network device is provided. The network device may include a memory, a processor, and a computer program that is stored in the memory and that is executable on the processor. When executing the computer program, the processor implements the route attribute update method applied to the first network device or the second network device according to the foregoing aspects.

According to a non-claimed sixth aspect, a computer-readable storage medium is provided. The computer-readable storage medium stores instructions, and the instructions are executed by a processor to implement the route attribute update method applied to the first network device or the second network device according to the foregoing aspects.

According to a non-claimed seventh aspect, a computer program product including instructions is provided. When the computer program product runs on a computer, the computer is enabled to perform the route attribute update method applied to the first network device or the second network device according to the foregoing aspects.

According to anon-claimed ninth aspect, a data communication system is provided. The system may include the first network device according to the foregoing aspects and the second network device according to the foregoing aspects.

In conclusion, in the solution provided in this application, the second network device may deliver the message used for the RPD to the first network device. The message includes the route policy, and the route policy includes the match condition field and the action field. When detecting that the route information of the BGP route matches the target feature carried in the match condition field, the first network device may automatically update the route attribute of the BGP route based on the route attribute carried in the action field. The first network device may automatically update the route attribute of the BGP route according to the route policy in the message, and the operation and maintenance personnel does not need to manually configure the route attribute. Therefore, the route attribute update efficiency is greatly improved, and the operation and maintenance costs of the data communication system are reduced. In addition, because the action field of the route policy may carry various types of route attributes, the route attribute of the BGP route can be flexibly updated, and the requirements of different application scenarios can be met.

### BRIEF DESCRIPTION OF DRAWINGS

FIG. 1 is a schematic structural diagram of a data communication system to which a route attribute update method is applied according to an embodiment of this application;
FIG. 2 is a flowchart of a route attribute update method according to an embodiment of this application;
FIG. 3 is a schematic structural diagram of another data communication system according to an embodiment of this application;
FIG. 4 is a schematic structural diagram of still another data communication system according to an embodiment of this application;
FIG. 5 is a schematic diagram of a data structure of network layer reachability information according to an embodiment of this application;
FIG. 6 is a flowchart of another route attribute update method according to an embodiment of this application;
FIG. 7 is a schematic structural diagram of yet another data communication system according to an embodiment of this application;
FIG. 8 is a schematic structural diagram of yet another data communication system according to an
FIG. 9 is a schematic structural diagram of yet another data communication system according to an embodiment of this application;
FIG. 10 is a schematic structural diagram of yet another data communication system according to an embodiment of this application;
FIG. 11 is a schematic structural diagram of yet another data communication system according to an embodiment of this application;
FIG. 12 is a schematic structural diagram of a first network device according to an embodiment of this application;
FIG. 13 is a schematic structural diagram of another first network device according to an embodiment of this application;
FIG. 14 is a schematic structural diagram of a second network device according to an embodiment of this application; and
FIG. 15 is a schematic structural diagram of a network device according to an embodiment of this application.

### DESCRIPTION OF EMBODIMENTS

With reference to the accompanying drawings, the following describes in detail a route attribute update method, a network device, and a system provided in embodiments of this application.

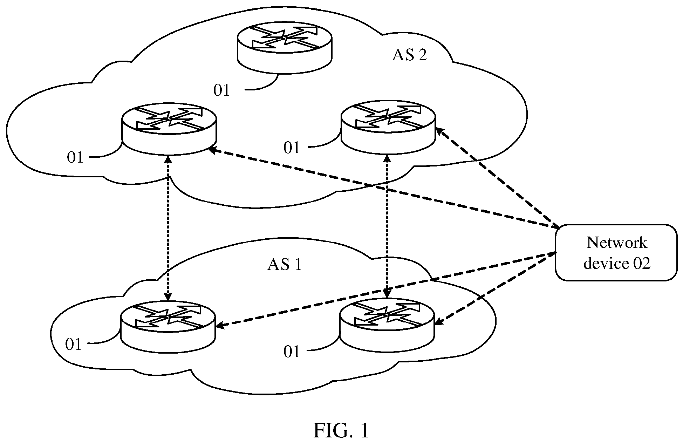

FIG. 1 is a schematic structural diagram of a data communication system to which a route attribute update method is applied according to an embodiment of this application. The system may be a system that is based on software defined networking (software defined networking, SDN). As shown in FIG. 1, the system may include a plurality of network devices 01 and a network device 02. The plurality of network devices 01 may belong to different autonomous systems (autonomous systems, ASs). For example, in the five network devices 01 shown in FIG. 1, two network devices 01 belong to an AS 1, and the other three network devices 01 belong to an AS 2. Each network device 01 may be a forwarding device such as a router or a switch. The network device 02 may be a network device that may monitor traffic and bandwidth usage in the system. The network device 02 may be a control device, for example, may be a network control engine (network control engine, NCE) or a controller (Controller). In addition, the network device 02 may be one server, a server cluster including several servers, or a cloud computing service center. A communication connection may be established between the network device 02 and one or more network devices 01 in each AS by using a wired network or a wireless network.

In this embodiment of this application, all network devices 01 in a same AS are connected to each other, and run the same interior gateway protocol (interior gateway protocol, IGP). The IGP may be the intermediate system to intermediate system (intermediate system to intermediate system, ISIS) protocol or the open shortest path first (open shortest path first, OSPF) protocol. An external routing protocol is used for a connection between network devices 01 in different ASs and a connection between the network device 01 and the network device 02. Certainly, the external routing protocol may also be used for connections between a plurality of network devices 01 in a same AS. The external routing protocol may be a BGP, and route reachability between the network device 01 in the different ASs may be implemented by using the BGP. In the data communication system, a pair of network devices having a BGP connection relationship may mutually be peers (peers), and may also be referred to as neighbors (neighbors). In addition, a pair of network devices having a BGP connection relationship in the same AS may mutually be internal BGP (internal BGP, IBGP) peers, and a pair of network devices having a BGP connection relationship in the different ASs may mutually be external BGP (external BGP, EBGP) peers.

A plurality of network devices 01 included in each AS in the data communication system may form a communication network. For example, the communication network may be a data center network (data center network, DCN), a backbone network, a metropolitan area network, a wide area network, a campus network, a virtual local area network (virtual local area network, VLAN), or a virtual extensible local area network (virtual extensible local area network, VXLAN).

In this embodiment of this application, the network device 02 may transfer a route policy to the network device 01 by using a message used for RPD. The network device 01 receiving the message may update, according to the route policy included in the message, a route attribute of a BGP route that is generated or received by the network device 01. Therefore, problems of a large configuration workload and low update efficiency caused by manually configuring the route attribute can be avoided.

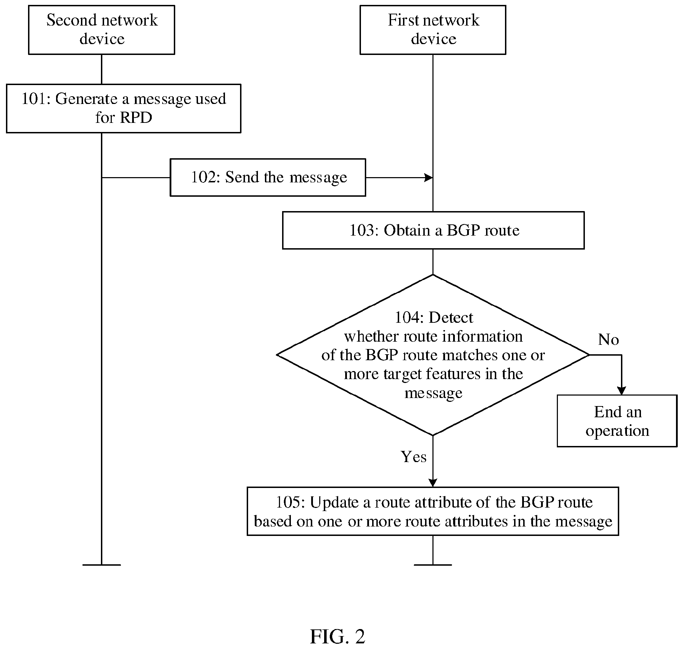

An embodiment of this application provides a route attribute update method. The method may be used in the data communication system shown in FIG. 1. In this embodiment of this application, an example in which a second network device delivers a message used for RPD to a target network device in a plurality of first network devices is used for description. The first network device may be the network device 01 in FIG. 1, and the second network device may be the network device 02 in FIG. 1. Refer to FIG. 2. The method may include the following steps.

Step 101: The second network device generates the message used for the RPD.

In this embodiment of this application, the second network device may monitor traffic and bandwidth usage in the data communication system in real time, and when determining, based on a monitoring result, that a route attribute of a BGP route obtained by the target network device in the plurality of first network devices needs to be adjusted, may generate the message used for the RPD for the target network device. Optionally, the second network device may automatically generate the message for the target network device based on the monitoring result. Alternatively, operation and maintenance personnel may input a route policy configuration instruction to the second network device based on the monitoring result, and the route policy configuration instruction may carry an identifier of the target network device and a route policy. The second network device may generate the message for the target network device based on the policy configuration instruction. The message may include the route policy. The route policy may include a match condition field and an action field. The match condition field carries one or more target features, and the action field carries one or more route attributes.

The match condition field may carry one or more of the following target features: a target address prefix (IP prefix), a target AS path (AS path) attribute, a target community (community) attribute, and an identifier of a target peer.

The action field may carry one or more of the following route attributes: a community attribute, an extended community (extended community, ext-community) attribute, a large community (large community) attribute, a next-hop address, a local preference (local preference), a peer identifier (peer id), and an accumulative interior gateway protocol (accumulative IGP, Aigp) metric value. In accordance with the invention, the action field carries at least the accumulative interior gateway protocol metric value. Both the address prefix and the next-hop address may be internet protocol (internet protocol, IP) addresses, for example, may be IP version 4 (IP version 4, IPv4) addresses or IP version 6 (IPv6) addresses.

Optionally, the action field in the route policy may include one or more type length value (type length value, TLV) fields, and each TLV field may carry one route attribute. TLV fields carrying the foregoing route attributes may be defined as follows:
1. A definition of a TLV field (Field) of the community attribute may be that shown in Table 1. Refer to Table 1. The TLV field may include an action sub type (Action Sub Type) field whose length (Length) is 1 byte (byte), an action sub type length (Action Sub Type Len) field whose length is 2 bytes, and one or more community attribute value (Community Value) fields whose length is 2 bytes.

**Table 1**

| Field | Length(bytes) |
|---|---|
| Action Sub Type | 1 |
| Action Sub Type Len | 2 |
| Community Value | 2 |
| ... | |

Each Community Value field may carry one community attribute. For a definition of the Community Value field, refer to a definition in a request for comments (request for comments, RFC) document numbered 1997 (namely, RFC1997).

2. A definition of a TLV field of the extended community attribute may be that shown in Table 2. Refer to Table 2. The TLV field may include an action sub type field whose length is 1 byte, an action sub type length field whose length is 2 bytes, and one or more extended community attribute value (ext-Community Value) fields whose lengths are 8 bytes or 20 bytes. Each ext-Community Value field may carry an extended community attribute.

**Table 2**

| Field | Length(bytes) |
|---|---|
| Action Sub Type | 1 |
| Action Sub Type Len | 2 |
| Ext-Community Value | 8/20 |
| ... | |

Optionally, a length of the extended community attribute may be 8 bytes. For a format, refer to a definition in RFC4360. If the extended community attribute includes an IPv6 address, the length of the ext-Community Value field may be 20 bytes. For a format, refer to a definition in RFC5701.

3. A definition of a TLV field of the large community attribute may be that shown in Table 3. Refer to Table 3. The TLV field may include an action sub type field whose length is 1 byte, an action sub type length field whose length is 2 bytes, and one or more large community attribute value (Large-Community Value) fields whose lengths are 12 bytes. Each Large-Community Value field may carry a large community attribute. For a format of each Large-Community Value field, refer to a definition in RFC8092.

**Table 3**

| Field | Length(bytes) |
|---|---|
| Action Sub Type | 1 |
| Action Sub Type Len | 2 |
| Large-Community Value | 12 |
| ... | |

4. A definition of a TLV field of the next-hop address may be that shown in Table 4. Refer to Table 4. The TLV field may include an action sub type field whose length is 1 byte, an action sub type length field whose length is 2 bytes, and a next hop value (Next Hop Value) field whose length is 4 bytes or 16 bytes. The Next Hop Value field may carry a next-hop address, and the address may be an IPv4 address or an IPv6 address.

**Table 4**

| Field | Length(bytes) |
|---|---|
| Action Sub Type | 1 |
| Action Sub Type Len | 2 |
| Next Hop Value | 4/16 |

5. A definition of a TLV field of the local preference may be that shown in Table 5. Refer to Table 5. The TLV field may include an action sub type field whose length is 1 byte, an action sub type length field whose length is 2 bytes, an operating (operating, Oper) field whose length is 1 byte, and a local preference value (LOCAL_PREF Value) field whose length is 4 bytes. The Oper field may indicate a type of an operation that needs to be performed on the local preference in the BGP route. The LOCAL_PREF Value field may carry a value of the local preference.

**Table 5**

| Field | Length(bytes) |
|---|---|
| Action Sub Type | 1 |
| Action Sub Type Len | 2 |
| Oper | 1 |
| LOCAL_PREF Value | 4 |

When a value of the Oper field is 0, it may indicate a replacement (replace) operation. When a value of the Oper field is 1, it may indicate an addition (add) operation. When a value of the Oper field is 2, it may indicate a subtraction (subtract) operation. To be specific, when the value of the Oper field is 0, it may indicate to replace a value of a local preference attribute in the BGP route with a value of the LOCAL_PREF Value field. When the value of the Oper field is 1, it may indicate to add a value of the LOCAL_PREF Value field to a value of a local preference attribute in the BGP route. When the value of the Oper field is 2, it may indicate to subtract a value of the LOCAL_PREF Value field from a value of a local preference attribute in the BGP route. When the value of the LOCAL_PREF Value field is added to or subtracted from the value of the local preference attribute in the BGP route, a value range of the local preference attribute should not be exceeded.

6. A definition of a TLV field of the peer identifier may be that shown in Table 6. Refer to Table 6. The TLV field may include an action sub type field whose length is 1 byte, an action sub type length field whose length is 2 bytes, and a peer identifier value (Peer-id Value) field whose length is 4 bytes. The Peer-id Value field may carry a peer identifier.

**Table 6**

| Field | Length(bytes) |
|---|---|
| Action Sub Type | 1 |
| Action Sub Type Len | 2 |
| Peer-id Value | 4 |

7. A definition of a TLV field of the Aigp may be that shown in Table 7. Refer to Table 7. The TLV field may include an action sub type field whose length is 1 byte, an action sub type length field whose length is 2 bytes, and an Aigp value (Aigp Value) field whose length is variable. When a value of the action sub type field is 1, the length of the Aigp value field may be 11 bytes. For a format of the Aigp value field, refer to a definition in RFC7311.

**Table 7**

| Field | Length(bytes) |
|---|---|
| Action Sub Type | 1 |
| Action Sub Type Len | 2 |
| Aigp Value | Variable |

Step 102: The second network device sends the message to the target network device.

The second network device may deliver the generated message used for the RPD to the target network device based on a BGP connection to the target network device.

In an optional implementation, the second network device may directly deliver the message to the target network device in the plurality of first network devices, where the message may further include a first community attribute, and the first community attribute indicates not to advertise the message to another network device. For example, the first community attribute may be NO_ADVERTISE, which may be abbreviated as NO_ADV.

Correspondingly, after receiving the message sent by the second network device, if detecting the first community attribute carried in the message, the target network device does not advertise the message to the another network device.

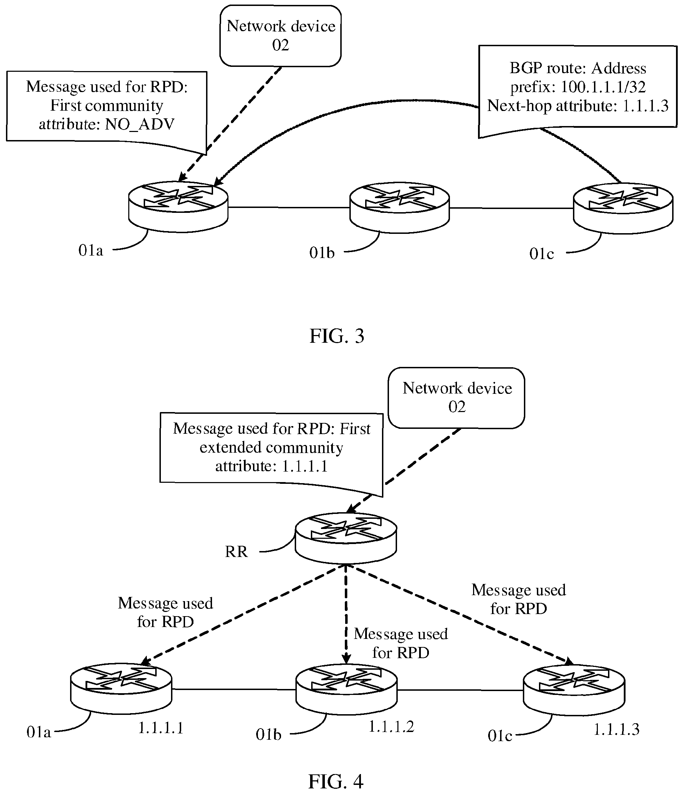

For example, as shown in FIG. 3, assuming that the target network device is a network device 01a, the network device 02 may directly deliver the message used for the RPD to the target network device 01a, where the message used for the RPD carries the first community attribute: NO_ADV.

In another optional implementation, to reduce network complexity on the basis of ensuring connectivity between network devices 01 in each AS in the data communication system, a plurality of network devices 01 included in the AS may be further grouped into one or more clusters (clusters). A network device 01 in each cluster serves as an RR to establish a BGP connection to each of the other network devices 01 (also referred to as clients) in the cluster, and no BGP connection needs to be established between clients.

After generating the message used for the RPD, the second network device may further directly deliver the message to the RR. The message further includes a first extended community attribute. The first extended community attribute may indicate the identifier of the target network device on which the message becomes effective. After receiving the message, the RR may advertise the message to all first network devices (namely, clients) connected to the RR. Each first network device receiving the message may detect whether an identifier of the first network device matches the identifier that is of the target network device and that is indicated by the first extended community attribute. If the identifier of the first network device is different from the identifier that is of the target network device and that is indicated by the first extended community attribute, the first network device may determine that the first network device is not the target network device, and may discard the message. If the identifier of the first network device matches the identifier that is of the target network device and that is indicated by the first extended community attribute, the first network device may determine that the first network device is the target network device, and may store the message. An identifier of a network device may be a router identifier (router ID) of the network device, or may be an address of the network device, for example, may be an IP address of the network device.

For example, as shown in FIG. 4, assuming that the identifier of the target network device 01a is 1.1.1.1, as shown in FIG. 4, the network device 02 may deliver the message used for the RPD to the RR, where the message includes the first extended community attribute, and the identifier that is of the target network device and that is indicated by the first extended community attribute is 1.1.1.1. In addition, the message does not carry the first community attribute: NO_ADV. After receiving the message, the RR may separately advertise the message to network devices 01a, 01b, and 01c connected to the RR. After receiving the message, because the identifier of the network device 01a matches the identifier 1.1.1.1 that is of the target network device and that is indicated by the first extended community attribute in the message, the network device 01a may determine that the network device 01a is the target network device, and store the message. After receiving the message, because identifiers of the network devices 01b and 01c are different from the identifier 1.1.1.1 that is of the target network device and that is indicated by the first extended community attribute in the message, the network devices 01b and 01c may discard the message.

Step 103: The target network device obtains the BGP route.

In this embodiment of this application, the BGP route obtained by the target network device may be a BGP route generated by the target network device, or a BGP route that is sent by another network device and that is received by the target network device. In addition, route information of the BGP route may include an address prefix and one or more route attributes.

The address prefix may be an IP address prefix, and the route attribute may include an origin (ORIGIN) attribute, an AS path attribute, and a next-hop attribute. The route attribute may further include a local preference attribute, a community attribute, and a multi-exit discriminator (multi-exit discriminator, MED) attribute.

For example, with reference to FIG. 3, it is assumed that the target network device 01a receives a BGP route whose address prefix is 100.1.1.3/32 and that is advertised by the network device 01c. If the identifier of the network device 01c is 1.1.1.3, a next-hop attribute carried in the BGP route may be 1.1.1.3.

Step 104: The target network device detects whether the route information of the BGP route matches the one or more target features in the message.

After obtaining the BGP route, the target network device may first detect whether the route information of the BGP route matches the one or more target features carried in the match condition field in the route policy included in the stored message.

In an optional implementation, if the route information of the BGP route does not match any target feature carried in the match condition field, the target network device may end a route attribute update operation. For example, the BGP route may be directly advertised to another network device or discarded. If the route information of the BGP route matches each target feature carried in the match condition field, the target network device may perform step 105.

In another optional implementation, in a scenario in which the message includes a plurality of target features, the target network device may end a route attribute update operation when detecting that the route information of the BGP route does not match the plurality of target features. In addition, the target network device may perform step 105 when detecting that the route information of the BGP route matches at least one target feature, that is, may also perform step 105 when the route information of the BGP route matches a part of target features.
The route policy further includes a policy type field. The policy type field indicates a policy effectiveness occasion of the route policy. The policy effectiveness occasion may include one of the following manners: policy import (import) effectiveness, policy export (export) effectiveness, policy next-hop recursion effectiveness, policy forwarding entry generation effectiveness, policy BGP route generation effectiveness, and the like. Correspondingly, after receiving the message, the target network device may detect, om the policy effectiveness occasion of the route policy carried in the policy type field, whether the route information of the BGP route matches the one or more target features carried in the match condition field.

For example, if the policy effectiveness occasion indicated by the policy type field is the policy import effectiveness, after receiving a BGP route advertised by another network device, the target network device may detect whether the route information of the BGP route matches the one or more target features carried in the match condition field.

If the policy effectiveness occasion indicated by the policy type field is the policy export effectiveness, when advertising the BGP route to another network device, the target network device may detect whether the route information of the BGP route matches the one or more target features carried in the match condition field.

If the policy effectiveness occasion indicated by the policy type field is the policy next-hop recursion effectiveness, when performing route next-hop recursion, that is, determining an outbound interface and a direct next hop that are used when the BGP route is used to forward a packet, the target network device may detect whether the route information of the BGP route matches the one or more target features carried in the match condition field.

If the policy effectiveness occasion indicated by the policy type field is the policy forwarding entry generation effectiveness, when generating a forwarding entry based on the BGP route, the target network device may detect whether the route information of the BGP route matches the one or more target features carried in the match condition field.

If the policy effectiveness occasion indicated by the policy type field is the policy BGP route generation effectiveness, when generating the BGP route (for example, importing a local route into a BGP route table), the target network device may detect whether the route information of the BGP route matches the one or more target features carried in the match condition field.

Optionally, the message includes network layer reachability information (network layer reachability information, NLRI), and the NLRI may include the policy type field, and may further carry the identifier of the target peer. As shown in Table 8, the NLRI may include a length field carrying an NLRI length (NLRI Length), the policy type (Policy Type) field indicating the policy effectiveness occasion, a distinguisher (Distinguisher) field carrying a preference of the route policy, and a peer address (Peer Address) field carrying the identifier of the target peer. A length of the length field and a length of the policy type field may both be 1 byte, the distinguisher field may have 4 bytes, and a length of the peer address field may be 4 bytes (carrying an IPv4 address) or 16 bytes (carrying an IPv6 address). Optionally, when a value of the policy type field is 1, it may indicate that the policy effectiveness occasion of the route policy is the policy export effectiveness. When a value of the policy type field is 2, it may indicate that the policy effectiveness occasion of the route policy is the policy import effectiveness.

For example, with reference to the NLRI shown in Table 8, it can be learned that in the message generated by the second network device, a length of the NLRI is 10 bytes, the policy effectiveness occasion of the route policy is the policy import effectiveness, the preference of the route policy is 0, and the identifier of the target peer is 1.1.1.3.

**Table 8**

| |
|---|
| NLRI Length (10) |
| Policy Type (2) |
| Distinguisher (0) |
| Peer Address (1.1.1.3) |

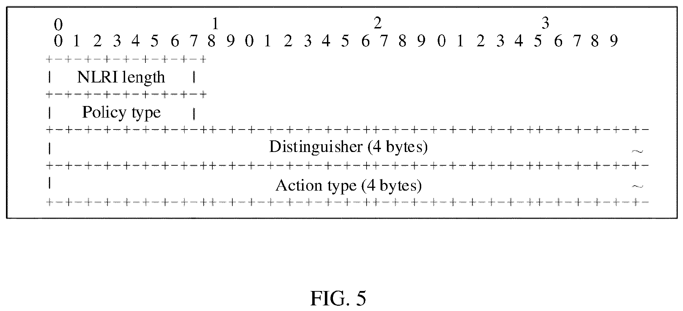

Optionally, in this embodiment of this application, a definition of the NLRI is further extended. For example, when a value of the policy type field in the NLRI is 3, it may indicate that the policy effectiveness occasion of the route policy is an occasion other than the policy import effectiveness and the policy export effectiveness. In addition, as shown in FIG. 5, in addition to the NLRI length field whose length is 1 byte, the policy type field whose length is 1 byte, and the distinguisher field whose length is 4 bytes, the NLRI may further include an action type (action type) field whose length is 4 bytes.

When the value of the policy type field is 1 or 2, the last four bytes in the NLRI may be the peer address field. When the value of the policy type field is one of 3 to 255 (for example, the value is 3), the last four bytes in the NLRI may be the action type field, and the action type field may indicate the policy effectiveness occasion of the route policy. For example, when a value of the action type field is 1, it may indicate that the policy effectiveness occasion of the route policy is the policy next-hop recursion effectiveness. When a value of the action type field is 2, it may indicate that the policy effectiveness occasion of the route policy is the policy forwarding entry generation effectiveness. When a value of the action type field is 3, it may indicate that the policy effectiveness occasion of the route policy is the policy BGP route generation effectiveness.

Optionally, the policy type field may be further extended to another definition based on an actual application scenario. For example, when the value of the policy type field is 3, it may indicate that the policy effectiveness occasion of the route policy is the policy next-hop recursion. When the value of the policy type field is 4, it may indicate that the policy effectiveness occasion of the route policy is the policy forwarding entry generation effectiveness. When the value of the policy type field is 5, it may indicate that the policy effectiveness occasion of the route policy is the policy BGP route generation effectiveness.

According to the method provided in this embodiment of this application, the policy type field may indicate the policy effectiveness occasion of the route policy, so that the target network device receiving the message can detect, on different occasions, whether the route information of the BGP route matches the target feature in the route policy, to effectively improve route attribute update flexibility.

Step 105: The target network device updates the route attribute of the BGP route based on the one or more route attributes in the message.

If the route information of the BGP route matches each target feature carried in the match condition field, the target network device may update the route attribute of the BGP route based on the one or more route attributes carried in the action field in the message. In other words, the target network device may update the route attribute of the BGP route according to the route policy included in the received message.

For example, if the action field carries the community attribute, the target network device may add the community attribute to the route attribute of the BGP route. If the action field carries the extended community attribute, the target network device may add the extended community attribute to the route attribute of the BGP route. If the action field carries the large community attribute, the target network device may add the large community attribute to the route attribute of the BGP route.

The target network device automatically adds the community attribute, the extended community attribute, or the large community attribute to the BGP route according to the route policy included in the message, so that the BGP route can be marked, application of the route policy can be simplified, and difficulty in BGP route maintenance and management can be reduced.

If the action field carries the next-hop address, the target network device may configure a next-hop attribute in the route attribute of the BGP route based on the next-hop address. For example, the target network device configures the next-hop attribute for the BGP route according to the route policy included in the message, so that a virtual next-hop (virtual next-hop, VNH) can be configured, to implement load balancing. The configuration may refer to update. For example, the next-hop attribute in the route attribute of the BGP route is configured based on the next-hop address may mean that the next-hop attribute is updated by using the next-hop address.

If the action field carries the local preference, the target network device may configure the local preference attribute in the route attribute of the BGP route based on the local preference. The local preference attribute may be used to determine a BGP route that is preferentially selected when a service flow leaves an AS. When a first network device obtains a plurality of BGP routes that have a same address prefix but different route attributes, the first network device preferentially selects a BGP route whose local preference attribute has a highest value. In this embodiment of this application, the target network device automatically configures the local preference attribute for the BGP route according to the route policy included in the message, so that traffic optimization of the service flow in the AS can be implemented.

If the action field carries the peer identifier, the target network device may configure, based on the peer identifier, an identifier of a network device sending the BGP route. To be specific, the target network device may record the peer identifier carried in the action field as the identifier of the network device sending the BGP route, or it may be understood as that the target network device may record the peer identifier carried in the action field on the BGP route, to identify the network device sending the BGP route. The peer identifier may be an identifier of a neighbor group (namely, a peer group). In this embodiment of this application, the target network device automatically configures, according to the route policy included in the message, the identifier of the network device sending the BGP route. This may be used in a unicast reverse path forwarding (unicast reverse path forwarding, URPF) scenario, and is used to prevent source address spoofing.

If the action field carries the Aigp metric value, the target network device may configure the Aigp metric value of the BGP route. The target network device automatically configures the Aigp metric value of the BGP route according to the route policy included in the message. This may be used in a traffic optimization scenario.

For example, it is assumed that the target feature carried in the match condition field in the route policy is a target address prefix: 100.1.1.3/32, and the action field carries a route attribute: the local preference. In the TLV field carrying the local preference, the value of the Oper field is 0, and the value of the LOCAL_PREF Value field is 100. If the target network device 01a receives the BGP route whose address prefix is 100.1.1.3/32 and that is advertised by the network device 01c, and the value of the local preference attribute in the BGP route is 0, the target network device may update the value of the local preference attribute in the BGP route to 100 based on the action field.

In conclusion, this embodiment of this application provides the route attribute update method. The second network device may deliver the message used for the RPD to the first network device, where the message includes the route policy, and the route policy includes the match condition field and the action field. When detecting that the route information of the BGP route matches the target feature carried in the match condition field, the first network device may automatically update the route attribute of the BGP route based on the route attribute carried in the action field. The first network device may automatically update the route attribute of the BGP route according to the route policy included in the message, and the operation and maintenance personnel does not need to manually configure the route attribute. Therefore, route attribute update efficiency is greatly improved, and operation and maintenance costs of the data communication system are reduced.

In addition, because the action field of the route policy may carry one or more of the following route attributes: the community attribute, the extended community attribute, the large community attribute, the next-hop address, the local preference, the peer identifier, and the Aigp metric value, the route attribute of the BGP route can be flexibly updated, and requirements of different application scenarios can be met.

In an optional implementation, if an SR policy is deployed in the data communication system, the route attribute update method provided in this embodiment of this application may be used in an SR policy scenario, to color a route.

In the data communication system, if a tunnel path of a service flow needs to be planned, a network device 02 may deliver the SR policy to a headend (headend) network device 01 of the tunnel path that the service flow needs to pass through. The SR policy includes an endpoint (endpoint), a color (color) identifier, and a segment list (segment list). The endpoint identifier indicates a tail-end network device of the tunnel path corresponding to the service flow. A path color indicated by the color identifier identifies performance of the tunnel path to the tail-end network device, for example, a low-latency tunnel or a low-cost tunnel. The segment list includes a segment identifier (segment identifier, SID) of a network device included in the tunnel path. The SID may be a label (label).

In a related technology, after the SR policy is deployed, an operator further needs to manually configure, on the headend network device based on the color identifier in the SR policy, a color extended community attribute for a BGP route whose address prefix is a target address prefix of the service flow (that is, color the BGP route). A forwarding table corresponding to the target address prefix may be associated with the segment list in the SR policy through coloring, so that a packet of a service flow that reaches the target address prefix may be forwarded by using the segment list. A process of associating the forwarding table corresponding to the target address prefix with the segment list in the SR policy may also be referred to as auto steering (auto steering) of the SR policy. However, during the auto steering of the SR policy, the color extended community attribute of the BGP route needs to be manually configured in a solution in the related technology. Consequently, a configuration workload is heavy and efficiency is low.

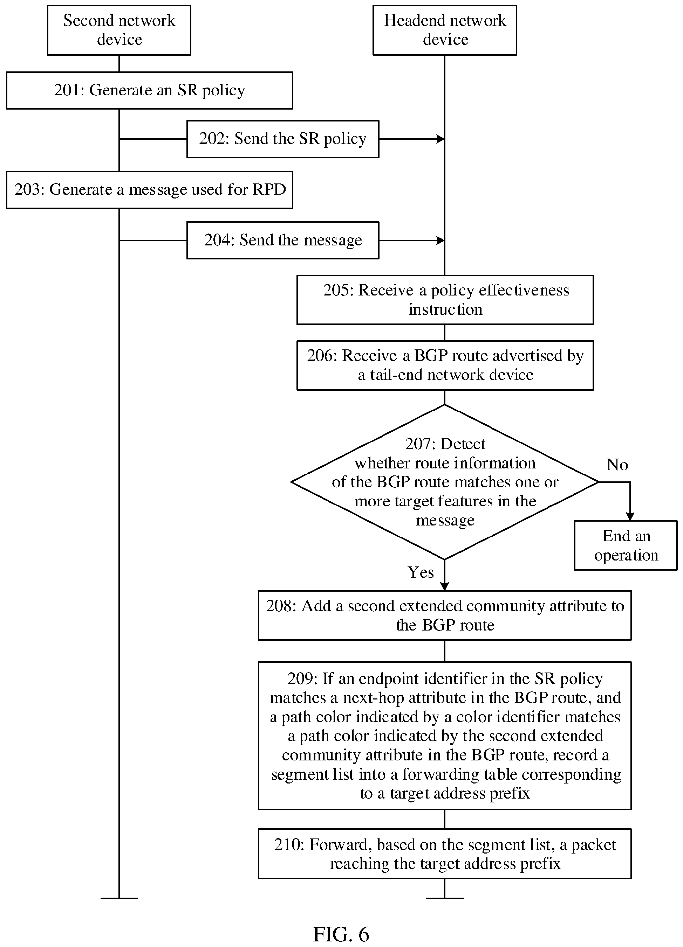

In the solution provided in this embodiment of this application, the second network device may deliver the message used for the RPD to the first network device, and the first network device may automatically add the color extended community attribute to the BGP route according to the route policy included in the message. In this way, the BGP route can be conveniently colored. Refer to FIG. 6. A route attribute update method may include the following steps.

Step 201: A second network device generates an SR policy.

In this embodiment of this application, an SR policy configuration instruction for a target service flow may be input into the second network device, and the second network device may generate the SR policy based on the SR policy configuration instruction. The SR policy carries an endpoint identifier, a color identifier, and a segment list. The endpoint identifier is an identifier of a tail-end network device on a tunnel path corresponding to the target service flow. A path color indicated by the color identifier may identify a specific tunnel path on which the target service flow reaches the tail-end network device, and the specific tunnel path may be a tunnel path that meets a service level agreement (service level agreement, SLA) and that is determined by operation and maintenance personnel from a plurality of tunnel paths between a headend network device and the tail-end network device. The segment list records labels of some or all network devices on a tunnel path planned for the service flow.

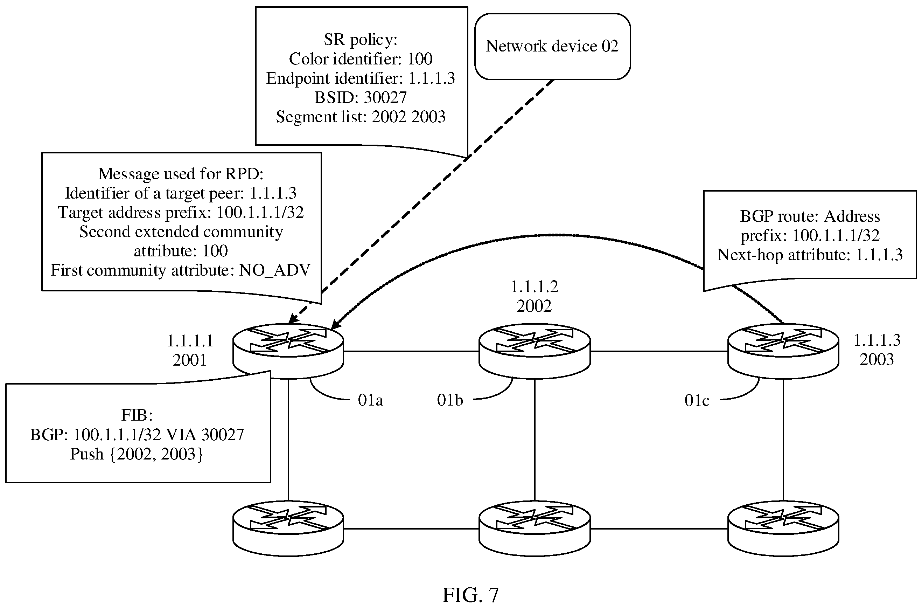

For example, with reference to FIG. 7, it is assumed that network devices included in a tunnel path planned by the operation and maintenance personnel for target service traffic whose target address prefix is 100.1.1.1/32 are sequentially a network device 01a→a network device 01a→a network device 01c. In other words, the network device 01a is a headend network device, and the network device 01c is a tail-end network device. Labels of the network devices 01a to 01c are 2001, 2002, and 2003 respectively. In addition, a path color of the tunnel path planned by the operation and maintenance personnel for the target service traffic is green, for example, indicating that the path is a low-latency path. In this case, an SR policy generated by a network device 02 based on configuration of the operation and maintenance personnel may be that shown in FIG. 7. Refer to FIG. 7. A color identifier in the SR policy is 100 (indicating that the path color is green), and an endpoint identifier is an identifier 1.1.1.3 of the network device 01c. The SR policy further includes a tunnel encapsulation attribute (tunnel encap attribute), and the tunnel encapsulation attribute includes a binding segment identifier (binding segment identification, BSID): 30027 and a segment list. The segment list records labels 2002 and 2003 of the network device 01b and the network device 01c on the transmission path. The BSID may uniquely identify the SR policy on the headend network device 01a,

Step 202: The second network device sends the SR policy to the headend network device.

After generating the SR policy, the second network device may deliver the SR policy to the headend network device by using a BGP SR policy address family. For example, with reference to FIG. 7, the network device 02 may deliver the SR policy to the headend network device 01a.

Step 203: The second network device generates a message used for RPD.

The second network device may generate, in response to the route policy configuration instruction of the operation and maintenance personnel or based on a processing result of automatic path adjustment inside the second network device, the message used for the RPD. A target feature carried in a match condition field in a route policy of the message includes at least a target address prefix. Certainly, the target feature carried in the match condition field may further include at least one of an AS path attribute, a target community attribute, and an identifier of a target peer. One or more route attributes carried in an action field of the route policy may include at least a second extended community attribute (namely, a color extended community attribute) indicating a path color. For a definition of a TLV field carrying the second extended community attribute in the action field, refer to the foregoing Table 2. Details are not described herein again.

For example, assuming that the path color indicated by the second extended community attribute is green, a structure of the TLV field carrying the second extended community attribute in the route policy may be that shown in Table 9. Refer to Table 9. It can be learned that in the TLV field, a value of an action sub type may be to be assigned, a value of an action sub type length is 8, a length of Ext-Community Value is 8 bytes, and a value of Ext-Community Value is 0x030B000000000064. The value is 100 after being converted into a decimal number, and may indicate that the path color is green.

**Table 9**

| Field | Length(bytes) |
|---|---|
| Action Sub Type (to be assigned) | 1 |
| Action Sub Type Len (8) | 2 |
| Ext-Community Value (0x030B000000000064) | 8 |

Step 204: The second network device sends the message to the headend network device.

In this embodiment of this application, the second network device may directly deliver the message to the headend network device, or may deliver the message to the headend network device through an RR.

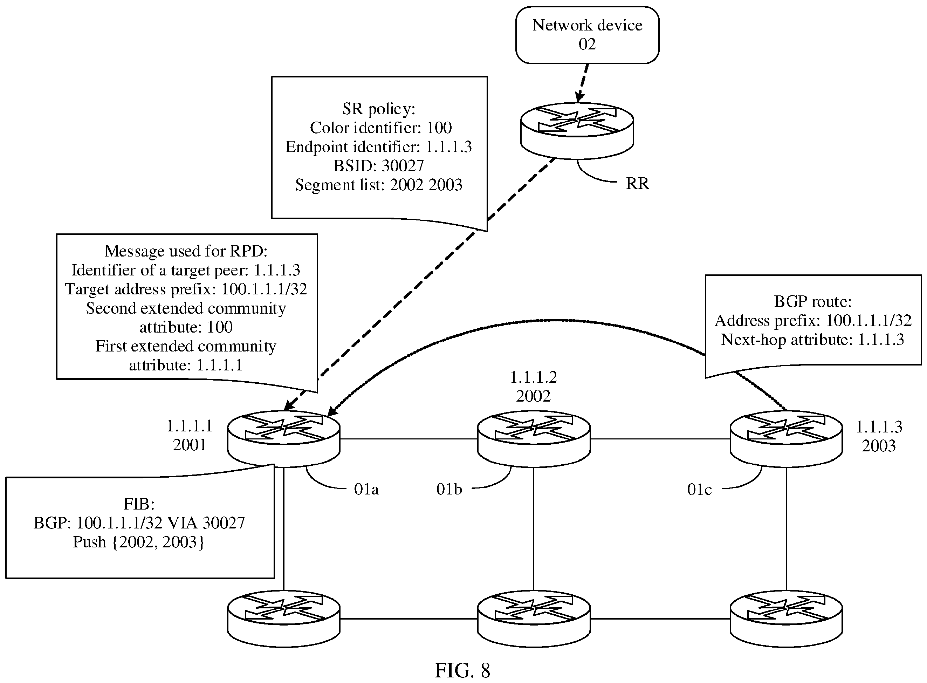

If the second network device directly delivers the message to the headend network device, refer to FIG. 7. The message further carries the second extended community attribute: 100, and carries a first community attribute: NO_ADV. If the second network device delivers the message to the headend network device through the RR, refer to FIG. 8. The message does not need to carry a first community attribute: NO_ADV, but needs to carry a first extended community attribute indicating an identifier of the headend network device. For example, as shown in FIG. 8, assuming that the identifier of the headend network device is 1.1.1.1, the first extended community attribute carried in the message is 1.1.1.1.

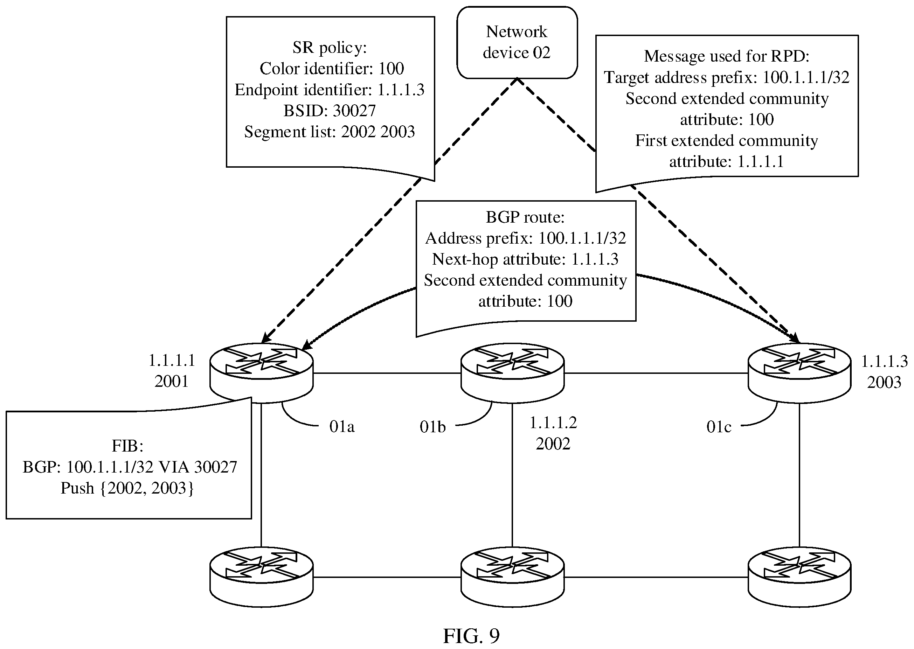

In a route coloring scenario, if a policy effectiveness occasion of the route policy is policy import effectiveness or policy next-hop recursion effectiveness, the second network device may deliver the message to the headend network device, that is, the headend network device is a target network device. For example, as shown in FIG. 7 and FIG. 8, the network device 02 may deliver the message to the headend network device 01a. If a policy effectiveness occasion of the route policy is policy export effectiveness, the second network device may deliver the message to the tail-end network device, that is, the tail-end network device is a target network device. For example, as shown in FIG. 9, the network device 02 may deliver the message to the tail-end network device 01c. In this embodiment of this application, an example in which the second network device delivers the message to the headend network device (that is, an example in which the headend network device is a target network device) is used for description.

Step 205: The headend network device receives a policy effectiveness instruction.

In this embodiment of this application, the operation and maintenance personnel may preconfigure the policy effectiveness instruction in the headend network device, to indicate an effectiveness condition of the route policy included in the message, for example, may indicate that the route policy becomes effective in a BGP unicast (unicast) address family. After detecting the policy effectiveness instruction and determining that the route policy meets the effectiveness condition, the headend network device may update a route attribute of a BGP route according to the route policy. If the headend network device does not detect the policy effectiveness instruction or detects that the route policy does not meet the effectiveness condition, the headend network device may determine that the route policy does not need to be responded to, that is, a route attribute of a BGP route does not need to be updated according to the route policy.

For example, the operation and maintenance personnel may configure the following policy effectiveness instruction in the headend network device 01a:
IPv4-family unicast:
peer 1.1.1.3 rpd-policy import enable.

The policy effectiveness instruction may indicate that the route policy becomes effective in a BGP IPv4 unicast address family, the route policy becomes effective only for a BGP route advertised by a peer identified as 1.1.1.3, and the policy effectiveness occasion is the policy import effectiveness.

The policy effectiveness instruction is configured in the headend network device, so that the headend network device can further verify the effectiveness condition of the route policy based on the policy effectiveness instruction, to avoid incorrect update of the route attribute caused by incorrect configuration of the target feature in the route policy, and ensure reliability of updating the route attribute according to the route policy.

Optionally, the foregoing step 205 may alternatively be deleted based on a situation, to be specific, the operation and maintenance personnel may not need to configure the policy effectiveness instruction, and the headend network device may directly update the route attribute of the BGP route according to the received route policy.

Step 206: The headend network device receives a BGP route advertised by the tail-end network device.

The BGP route may be a unicast route. Refer to FIG. 7 to FIG. 9. The BGP route includes at least an address prefix and a route attribute. The route attribute includes at least a next-hop attribute.

Step 207: The headend network device detects whether route information of the BGP route matches one or more target features in the message.

If determining that the route information of the BGP route matches the one or more target features carried in the match condition field in the route policy included in the message, the headend network device may continue to perform step 208. If determining that the route attribute of the BGP route does not match the one or more target features carried in the match condition field in the route policy, the headend network device may end a route attribute update operation. For example, after receiving the BGP route advertised by the tail-end network device, the headend network device may detect whether the address prefix of the BGP route matches the target address prefix carried in the match condition field in the route policy. If the address prefix of the BGP route matches the target address prefix, step 208 may continue to be performed.

Optionally, if the message further includes the identifier of the target peer, after receiving the BGP route, the headend network device may further first detect whether a BGP session address of the network device that advertises the BGP route matches the identifier of the target peer. If the BGP session address of the network device that advertises the BGP route matches the identifier of the target peer, the headend network device may continue to detect whether the route information of the BGP route matches another target feature carried in the match condition field. If the BGP session address of the network device that advertises the BGP route does not match the identifier of the target peer, the headend network device may end a route attribute update operation.

The route policy further carries a policy type field. If the policy effectiveness occasion indicated by the policy type field is the policy import effectiveness, after receiving the BGP route, the headend device may detect whether the route information of the BGP route matches the one or more target features carried in the match condition field in the route policy. If the policy effectiveness occasion indicated by the policy type field is the policy next-hop recursion effectiveness, when performing route recursion, the headend device may detect whether the route information of the BGP route matches the one or more target features carried in the match condition field in the route policy.

Step 208: The headend network device adds the second extended community attribute to the BGP route.

If the headend device determines that the route information of the BGP route matches the one or more target features carried in the match condition field in the route policy, the headend device may add the second extended community attribute to the BGP route.

For example, with reference to FIG. 7 and FIG. 8, it is assumed that an address prefix of the BGP route that is received by the headend network device 01a and that is advertised by the tail-end network device 01c is 100.1.1.1/32. Because the address prefix of the BGP route matches the target address prefix in the route policy, the headend network device 01a may add the second extended community attribute 100 to the BGP route. The second extended community attribute with a value of 100 may indicate that the path color is green.

Optionally, in step 204, the network device 02 may also deliver the message to the tail-end network device of the target service flow, and the policy effectiveness occasion of the route policy included in the message is the policy export effectiveness. Correspondingly, the tail-end network device may also update the route attribute of the BGP route according to the method shown in step 205 to step 208 when advertising the BGP route to the headend device.

For example, with reference to FIG. 9, after the tail-end network device 01c updates, according to the route policy included in the message, the route attribute of the BGP route generated by the tail-end network device 01c, the BGP route sent by the tail-end network device 01c to the headend network device 01a further includes the second extended community attribute 100.

Step 209: If the endpoint identifier in the SR policy matches the next-hop attribute in the BGP route, and the path color indicated by the color identifier matches the path color indicated by the second extended community attribute in the BGP route, the headend network device records the segment list into a forwarding table corresponding to the target address prefix.

In this embodiment of this application, after updating the BGP route, the headend network device may further determine, based on the next-hop attribute in the BGP route and the second extended community attribute, whether the SR policy received by the headend network device matches the BGP route. Specifically, the headend network device may detect whether the endpoint identifier in the SR policy matches the next-hop attribute in the BGP route, and whether the path color indicated by the color identifier in the SR policy matches the path color indicated by the second extended community attribute in the BGP route.

If the endpoint identifier carried in the SR policy matches the next-hop attribute, and the path color indicated by the color identifier matches the path color indicated by the second extended community attribute, the headend network device may record the segment list in the SR policy into a forwarding information table (forwarding information base, FIB) corresponding to the target address prefix. In other words, a control plane of the headend network device may deliver the segment list in the SR policy used as a forwarding entry of the target address prefix to an FIB table of a forwarding plane. The FIB may also be referred to as a forwarding table for short.

Step 210: The headend network device forwards, based on the segment list, a packet reaching the target address prefix.

After receiving a service flow whose target address prefix is the target address prefix, the headend network device may search the FIB, push a label in the segment list into a label stack of the service flow, and enter an SR forwarding procedure. In other words, the headend network device may use the segment list to forward a packet, of the service flow, reaching the target address prefix.

For example, with reference to FIG. 7 to FIG. 9, the endpoint identifier 1.1.1.3 in the SR policy whose BSID is 30027 matches the next-hop attribute 1.1.1.3 of the BGP route, and both the path color indicated by the color identifier and the path color indicated by the second extended community attribute in the BGP route are green. Therefore, the headend network device 01a may associate the forwarding table of the target address prefix 100.1.1.1/32 with the segment list in the SR policy whose BSID is 30027. In other words, the headend network device 01a records the segment list 2002 and 2003 in the SR policy whose BSID is 30027 into the forwarding table corresponding to the target address prefix 100.1.1.1/32. After receiving a service flow whose target address prefix is 100.1.1.3 and searching the FIB, the headend network device 01a may push labels 20002 and 20003 in the segment list into the label stack, and enter the SR forwarding procedure.

In another optional implementation, the route attribute update method provided in this embodiment of this application may be used in VNH configuration, to implement load balancing.

Optionally, in the route policy included in the message, the one or more route attributes carried in the action field may include a next-hop address, and the next-hop address may be a VNH address. Correspondingly, in step 105 in the embodiment shown in FIG. 2, if the route information of the BGP route matches the one or more target features carried in the match condition field, the target network device may modify the next-hop attribute in the BGP route to the VNH address.

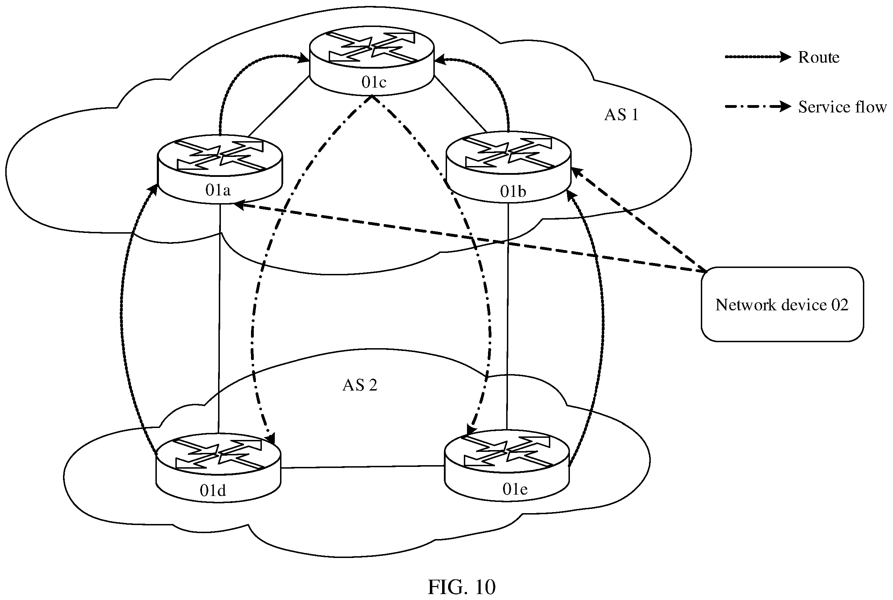

For example, as shown in FIG. 10, it is assumed that the data communication system includes an AS 1 and an AS 2. The AS 1 includes network devices 01a, 01b, and 01c, and the AS 2 includes network devices 01d and 01e. It can be learned from FIG. 10 that a service flow may be transmitted from the AS 1 to the AS 2 through two links: a link between the network device 01a and the network device 01d and a link between the network device 01b and the network device 01e. To implement load balancing when a service flow is transmitted on the two links, operation and maintenance personnel may preconfigure a route corresponding to the VNH address in the network device 01a in the AS 1, and also preconfigure the route corresponding to the VNH address in the network device 01b. A target address of the route is the VNH address, and the route corresponding to the VNH address may be referred to as a VNH route. In addition, on the network device 01a, an outbound interface of the VNH route is an outbound interface connecting the network device 01a and the network device 01d, and on the network device 01b, an outbound interface of the VNH route is an outbound interface connecting the network device 01b and the network device 01e. The VNH route may be further advertised to another network device in the AS 1 by using the IGP protocol. For example, the VNH route may be advertised to the network device 01c. In this way, the network device 01c generates a VNH route reaching the VNH address. The VNH route has two outbound interfaces: an outbound interface connecting the network device 01c and the network device 01a and an outbound interface connecting the network device 01c and the network device 01b.

The network device 02 may separately deliver a message used for RPD to the network devices 01a and 01b. A match condition field in the message carries a target address prefix of a service flow, an action field in the route policy carries a VNH address, and the VNH address is the same as a target address of the VNH route configured in the network device 01a and the network device 01b. For example, the VNH address may be 192.168.0.1.

After receiving the message, the network device 01a and the network device 01b may modify, to the VNH address, a next-hop attribute of a BGP route whose address prefix matches the target address prefix carried in the match condition field in the BGP route received by the network device 01a the network device 01b, that is, modify the next-hop attribute of the BGP route to 192.168.0.1. The network device 01a and the network device 01b separately advertise modified BGP route to another network device in the AS 1, for example, advertise the modified BGP route to the network device 01c. When the network device 01c recurses a next hop of the BGP route, the next hop of the BGP route may be recursed to a target address of the VNH route in the network device 01c. In this way, when forwarding a service flow by using the BGP route, the network device 01c may send the service flow to an outbound interface of the VNH route. Therefore, the service flow is sent to the network device 01a and the network device 01b in a load sharing manner. Further, load balancing of the service flow from the AS 1 to the AS 2 can be implemented on the two links: the network device 01a→the network device 01d and the network device 01b→the network device 01e.

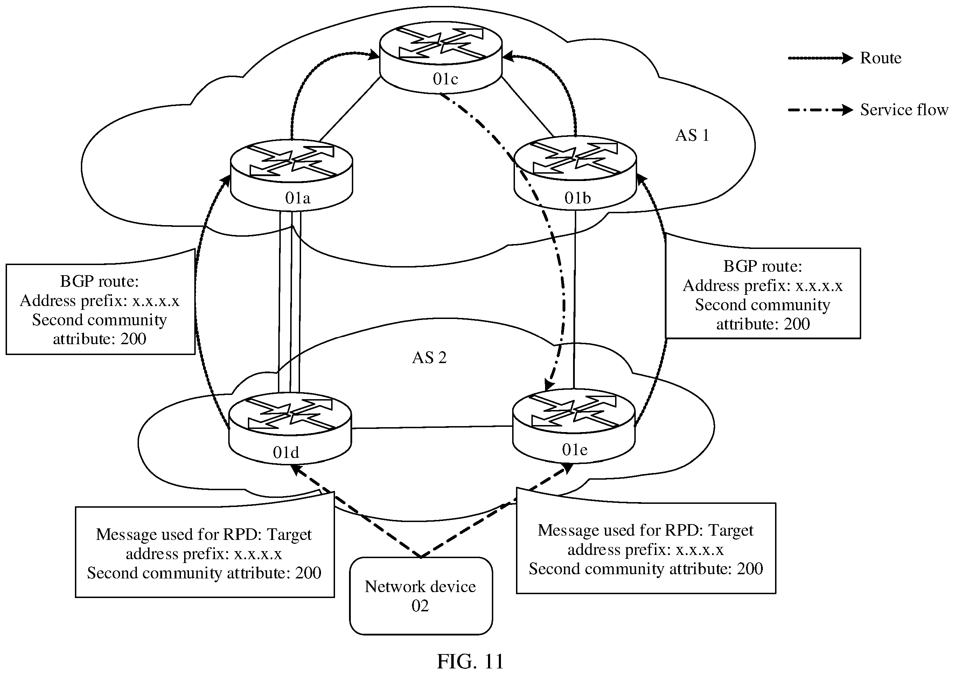

Refer to FIG. 10 and FIG. 11. In this embodiment of this application, the link between the network device 01a and the network device 01d and the link between the network device 01b and the network device 01e each may include one or more sublinks. For example, as shown in FIG. 11, the link between the network device 01a and the network device 01d includes three sublinks, and the three sublinks may be connected to the network device 01d through three different outbound interfaces of the network device 01a, If load sharing also needs to be performed on the sublinks between the network device 01a and the network device 01d, the operation and maintenance personnel may configure, in the network device 01a, a plurality of routes corresponding to a same VNH address. An outbound interface of each route is an outbound interface connecting the network device 01a and the network device 01d, and the routes have different outbound interfaces. After the plurality of routes are advertised to the network device 01c, load balancing of the plurality of sublinks between the network device 01a and the network device 01d can be implemented through the foregoing BGP route diffusion and next hop recursion.

Certainly, in an alternative manner of this embodiment of this application, the operation and maintenance personnel may manually put a VNH configuration instruction into the network device 01a and the network device 01b, that is, add a route policy node (node), to modify next-hop attributes of BGP routes advertised by the two network devices. For example, assuming that the VNH address is 192.168.0.1, the VNH configuration instruction may be as follows:
route-policy rp_IP_in permit node 15
apply ip-address next-hop 192.168.0.1.

In still another optional implementation, the route attribute update method provided in this embodiment of this application may be further used in restoration of a next-hop attribute of a first network device for which a VNH address is configured.

In a scenario in which a VNH address is configured by using instructions, to implement load balancing of a plurality of links, if bandwidth is reduced due to a fault on one of the links, and first network devices at two ends of the faulty link still maintain a connected state, a service flow is still forwarded in a load sharing manner on the plurality of links, causing traffic congestion on the faulty link. To relieve traffic congestion of the faulty link, a VNH address of each first network device needs to be restored to an original next-hop attribute.

In this embodiment of this application, a second network device may deliver a message used for RPD to a target network device, and an action field in a route policy included in the message carries a second community attribute. The target network device may be a previous-hop network device of the first network device for which the VNH address is configured, and the second community attribute identifies a BGP route whose next-hop attribute needs to be restored. After receiving the message, the target network device may add the second community attribute carried in the action field to a route attribute of the BGP route advertised by the target network device.

In addition, operation and maintenance personnel may put a match instruction in the target network device. The match instruction instructs not to modify a next-hop attribute of the BGP route if the route attribute of the BGP route received by the target network device includes the second community attribute carried in the action field.

For example, with reference to FIG. 11, it is assumed that bandwidth is reduced because a fault occurs on a link between a network device 01a and a network device 01d. However, because a BGP connection state is still maintained between the network device 01a and the network device 01d, the network device 01a in an AS 1 does not sense the fault. As a result, a service flow from the AS 1 to an AS 2 is still forwarded in a load sharing manner on two links: the network device 01a→the network device 01d and a network device 01b→a network device 01e, causing traffic congestion on the link: the network device 01a→the network device 01d. To adjust some traffic to the link: the network device 01b→the network device 01e and relieve congestion on the link: the network device 01a→the network device 01d, original next-hop attributes of some BGP routes need to be restored on the network device 01a and the network device 01b, and a preference of a BGP route advertised by the network device 01e to the network device 01b needs to be increased.

As shown in FIG. 11, in a traffic optimization scenario, a network device 02 may separately deliver a message including a route policy to the network device 01d and the network device 01e, where a match condition field in the route policy carries a target address prefix x.x.x.x, an action field carries a second community attribute 200, and a policy effectiveness occasion of the route policy is policy export effectiveness. After receiving the message, the network device 01d and the network device 01e may add the second community attribute 200 to BGP routes whose address prefixes are the target address prefix x.x.x.x and that are advertised by the network device 01d and the network device 01e.

The operation and maintenance personnel further needs to input, in the network devices 01a and 01b, a route policy configuration instruction for the second community attribute carried in the action field, that is, add a route policy node (node). In addition, a preference of the route policy node may be higher than that of a route policy node added by using a VNH configuration instruction, to ensure that the next-hop attribute of the BGP route carrying the second community attribute is not modified to the VNH address.

For example, the route policy configuration instruction input by the operation and maintenance personnel may be as follows:
route-policy rp_IP_out permit node 10
   if-match community 200
   skip
route-policy rp_IP_out permit node 15
   apply ip-address next-hop 192.168.0.1

Based on the foregoing route policy configuration instruction, the BGP route carrying the second community attribute 200 matches the route policy node: node 10. Therefore, a next route policy node (namely, a node 15) is not entered to modify a next-hop attribute. In other words, the next-hop attribute in the BGP route carrying the second community attribute 200 is not modified to the VNH address: 192.168.0.1.

In the foregoing scenario, to improve a preference of the BGP route advertised by the network device 01e to the network device 01b, an MED attribute or an AS path attribute may be carried in the action field in the message delivered to the network device 01d or the network device 01e, to modify the MED attribute or the AS path attribute of the BGP route advertised by the network device 01d or 01e. Details are not described in this embodiment of this application. Refer to FIG. 11. It can be learned that after the original next-hop attributes of the BGP routes are restored on the network device 01a to the network device 01b and the preference of the BGP route advertised by the network device 01e to the network device 01b is increased according to the foregoing method, the service flow may be transmitted on the link: the network device 01b→the network device 01e, to effectively relieve congestion on the link: the network device 01a→the network device 01d.

In conclusion, this embodiment of this application provides the route attribute update method. The second network device may deliver the message used for the RPD to the first network device, where the message includes the route policy, and the route policy includes the match condition field and the action field. When detecting that the route information of the BGP route matches the target feature carried in the match condition field, the first network device may automatically update the route attribute of the BGP route based on the route attribute carried in the action field. The first network device may automatically update the route attribute of the BGP route according to the route policy, and the operation and maintenance personnel does not need to manually configure the route attribute. Therefore, the route attribute update efficiency is greatly improved, and the operation and maintenance costs of the data communication system are reduced.

In addition, because the action field in the message may carry one or more of the following route attributes: the community attribute, the extended community attribute, the large community attribute, the next-hop address, the local preference, the peer identifier, and the Aigp metric value, the route attribute of the BGP route can be flexibly updated, and requirements of different application scenarios can be met.

A message field is further extended. Therefore, in the route attribute update method provided in this embodiment of this application, flexible update of another protocol route attribute, for example, update of an IGP route attribute, and flexible application of another scenario in which policy control is required at a data communication control layer can be easily implemented.

Optionally, a sequence of the steps of the route attribute update method provided in this embodiment of this application may be appropriately adjusted, or the steps may be correspondingly increased or decreased based on a situation. For example, step 203 and step 204 may be performed before step 202. Any variation method readily figured out by a person skilled in the art within the technical scope disclosed in this application shall fall within the protection scope of this application. Therefore, details are not described herein.

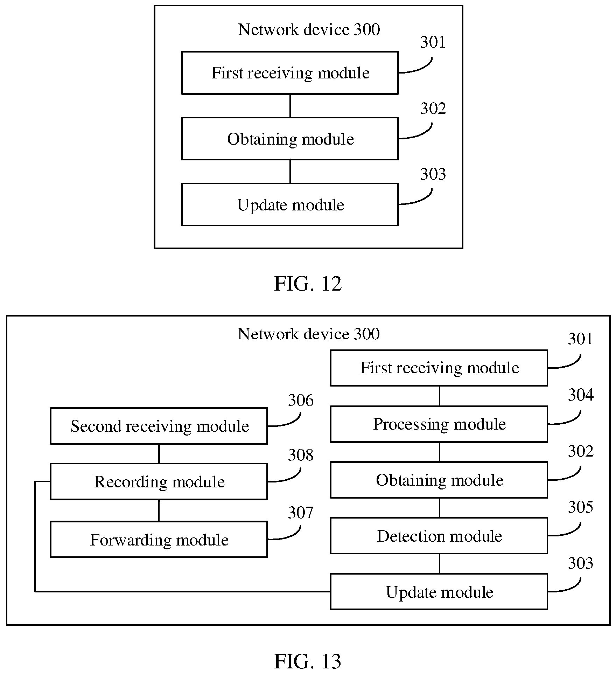

An embodiment of this application further provides a network device 300. The network device 300 may be used in a data communication system, for example, may be used in the system shown in FIG. 1. The network device 300 may implement functions of the first network device in the embodiment shown in FIG. 2 or FIG. 6. Refer to FIG. 12. The network device 300 includes the following modules.

A first receiving module 301 is configured to receive a message used for RPD from a second network device, where the message includes a route policy, the route policy includes a match condition field and an action field, the match condition field carries one or more target features, and the action field carries one or more route attributes.

For function implementation of the first receiving module 301, refer to related descriptions of step 102 and step 204.

An obtaining module 302 is configured to obtain a border gateway protocol BGP route.

For function implementation of the obtaining module 302, refer to related descriptions of step 103 and step 206.

An update module 303 is configured to update a route attribute of the BGP route based on the one or more route attributes carried in the action field if route information of the BGP route matches the one or more target features.

The action field carries one or more of the following route attributes:
a community attribute, an extended community attribute, a large community attribute, a next-hop address, a local preference, a peer identifier, and an accumulative interior gateway protocol metric value , wherein the action field according to the invention carries at least the accumulative interior gateway protocol metric value. For function implementation of the update module 303, refer to related descriptions of step 105.

In an optional implementation, the first receiving module 301 may be configured to:
receive the message sent by the second network device, where the message further includes a first community attribute, and the first community attribute indicates not to advertise the message to another network device.

In another optional implementation, the first receiving module 301 may be configured to:
receive the message that is from the second network device and that is sent by an RR, where the message further includes a first extended community attribute, and the first extended community attribute indicates an identifier of a target network device on which the route policy becomes effective.

Correspondingly, as shown in FIG. 13, the network device may further include:
a processing module 304, configured to: if an identifier of the first network device is different from the identifier that is of the target network device and that is indicated by the first extended community attribute, discard the message; or if an identifier of the first network device matches the identifier that is of the target network device and that is indicated by the first extended community attribute, store the message.

The route policy further includes a policy type field, the policy type field indicates a policy effectiveness occasion of the route policy, and the policy effectiveness occasion includes one of the following manners: policy import effectiveness, policy export effectiveness, policy next-hop recursion effectiveness, policy forwarding entry generation effectiveness, and policy BGP route generation effectiveness. Refer to FIG. 13. The first network device may further include:
a detection module 305, configured to detect, on the policy effectiveness occasion indicated by the policy type field, whether the route information of the BGP route matches the one or more target features carried in the match condition field. For function implementation of the detection module 305, refer to related descriptions of step 104 and step 207.

Optionally, the one or more target features carried in the match condition field include a target address prefix, the one or more route attributes carried in the action field include a second extended community attribute indicating a path color, the BGP route includes an address prefix and a route attribute, and the route attribute of the BGP route includes a next-hop attribute.

The update module 303 may be configured to add the second extended community attribute to the BGP route if the address prefix of the BGP route matches the target address prefix. For function implementation of the update module 303, refer to related descriptions of step 208.

Still refer to FIG. 13. The network device may further include:
a second receiving module 306, configured to receive a segment routing policy from the second network device, where the segment routing policy carries a color identifier, an endpoint identifier, and a segment list. For function implementation of the second receiving module 306, refer to related descriptions of step 202.

Optionally, the second receiving module 306 and the first receiving module 301 may be a same module.

A forwarding module 307 is configured to use the segment list to forward a packet reaching the target address prefix if the endpoint identifier carried in the segment routing policy matches the next-hop attribute in the BGP route and a path color indicated by the color identifier matches the path color indicated by the second extended community attribute in the BGP route. For function implementation of the forwarding module 307, refer to related descriptions of step 210.

Optionally, the first network device may further include:
a recording module 308, configured to record the segment list into a forwarding table corresponding to the target address prefix. For function implementation of the recording module 308, refer to related descriptions of step 209.

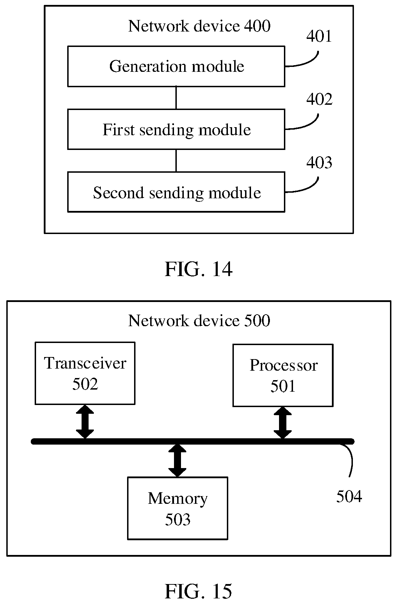

An embodiment of this application further provides a network device 400. The network device 400 may be used in a data communication system, for example, may be used in the system shown in FIG. 1. The network device 400 may implement functions of the second network device in the embodiment shown in FIG. 2 or FIG. 6. Refer to FIG. 14. The network device 400 includes:
a generation module 401, configured to generate a message used for RPD, where the message includes a route policy, the route policy includes a match condition field and an action field, the match condition field carries one or more target features, the action field carries one or more route attributes, and the action field carries one or more of the following route attributes: a community attribute, an extended community attribute, a large community attribute, a next-hop address, a local preference, a peer identifier, and an accumulative interior gateway protocol metric value, wherein the action field according to the invention carries at least the accumulative interior gateway protocol metric value.

For function implementation of the generation module 401, refer to related descriptions of step 101 and step 203.

A first sending module 402 is configured to send the message to a first network device, where the message indicates the first network device to update a route attribute of a BGP route according to the route policy.

For function implementation of the first sending module 402, refer to related descriptions of step 102 and step 204.

Optionally, the one or more target features may include a target address prefix, and the one or more route attributes carried in the action field may include a second extended community attribute indicating a path color. As shown in FIG. 14, the second network device may further include:
a second sending module 403, configured to send an SR policy to the first network device, where the SR policy carries a color identifier, an endpoint identifier, and a segment list, and the segment routing policy indicates the first network device, if determining that the endpoint identifier matches a next-hop attribute in the BGP route and a path color indicated by the color identifier matches the path color indicated by the second extended community attribute in the BGP route, to use the segment list to forward a packet reaching the target address prefix.

For function implementation of the second sending module 403, refer to related descriptions of step 201 and step 202. In addition, the second sending module 403 and the first sending module 402 may be a same module.

It should be understood that the network device in this embodiment of this application may further be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof. Alternatively, the route attribute update method provided in the foregoing method embodiment may be implemented by using software. When the route attribute update method provided in the foregoing method embodiment is implemented by using software, modules in the network device may be software modules.

FIG. 15 is a schematic structural diagram of another network device according to an embodiment of this application. The network device 500 may be used in a data communication system, for example, may be used in the system shown in FIG. 1. The network device 500 may be a first network device or a second network device. Refer to FIG. 15. The network device 500 may include a processor 501, a memory 502, a transceiver 503, and a bus 504. The bus 504 is configured to connect the processor 501, the memory 502, and the transceiver 503. The transceiver 503 (which may be wired or wireless) may implement a communication connection to another device. The memory 502 stores a computer program, and the computer program is used to implement various application functions.

It should be understood that in this embodiment of this application, the processor 501 may be a CPU, or the processor 501 may be another general-purpose processor, a digital signal processor (DSP), an application-specific integrated circuit (ASIC), a field-programmable gate array (FPGA), a GPU or another programmable logic device, a discrete gate or a transistor logic device, a discrete hardware component, or the like. The general-purpose processor may be a microprocessor, any conventional processor, or the like.

The memory 502 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to a data bus, the bus 504 may further include a power bus, a control bus, a status signal bus, and the like. However, for clear description, various types of buses in the figure are marked as the bus 504.

The processor 501 is configured to execute the computer program stored in the memory 502. When the network device is a first network device, the processor 501 executes the computer program to implement the steps performed by the first network device in the foregoing method embodiment. When the network device is a second network device, the processor 501 executes the computer program 5021 to implement the steps performed by the second network device in the foregoing method embodiment.

An embodiment, that is not-claimed, of this application further provides a computer-readable storage medium. The computer-readable storage medium stores instructions, and the instructions are executed by a processor to implement the steps in the foregoing method embodiment.

An embodiment, that is not claimed, of this application further provides a computer program product including instructions. When the computer program product runs on a computer, the computer is enabled to perform the steps in the foregoing method embodiment.

An embodiment of this application further provides a data communication system. Refer to FIG. 1, FIG. 3, FIG. 4, and FIG. 7 to FIG. 11. The data communication system may include a network device 02 and a plurality of network devices 01. The network device 02 may be the network device shown in FIG. 14 or FIG. 15. Each network device 01 may be the network device shown in FIG. 12, FIG. 13, or FIG. 15.

All or some of the foregoing embodiments may be implemented by using software, hardware, firmware, or any combination thereof. When software is used to implement embodiments, the foregoing embodiments may be implemented all or partially in a form of a computer program product. The computer program product includes one or more computer instructions. When the computer program instructions are loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

It should be understood that "at least one" mentioned in this specification means one or more and "a plurality of" means two or more. The foregoing descriptions are merely optional embodiments of this application, but are not intended to limit this application.

## Claims

1. A route attribute update method, wherein the method comprises:
receiving (102, 204), by a first network device, a message used for route policy distribution, RPD, from a second network device, wherein the message comprises a route policy, the route policy comprises a match condition field and an action field, the match condition field carries one or more target features, and the action field carries one or more route attributes;
obtaining (103, 206), by the first network device, a border gateway protocol, BGP, route; and
updating (105, 208), by the first network device, a route attribute of the BGP route based on the one or more route attributes if route information of the BGP route matches the one or more target features, wherein
the action field carries one or more of the following route attributes:
a community attribute, an extended community attribute, a large community attribute, a next-hop address, a local preference, a peer identifier, and an accumulative interior gateway protocol metric value,
**characterized in that**
the action field carries at least the accumulative interior gateway protocol metric value.

2. The method according to claim 1, wherein the receiving (102), by a first network device, a message from a second network device comprises:
receiving, by the first network device, the message sent by the second network device, wherein the message further comprises a first community attribute, and the first community attribute indicates not to advertise the message to another network device.

3. The method according to claim 1, wherein the receiving (102), by a first network device, a message from a second network device comprises:
receiving, by the first network device, the message that is from the second network device and that is sent by a route reflector, wherein the message further comprises a first extended community attribute, and the first extended community attribute indicates an identifier of a target network device on which the route policy becomes effective; and
the method further comprises:
if an identifier of the first network device is different from the identifier that is of the target network device and that is indicated by the first extended community attribute, discarding, by the first network device, the message; or if an identifier of the first network device matches the identifier that is of the target network device and that is indicated by the first extended community attribute, storing, by the first network device, the message.

4. The method according to any one of claims 1 to 3, wherein the one or more target features comprise a target address prefix, the one or more route attributes carried in the action field comprise a second extended community attribute indicating a path color, the BGP route comprises an address prefix and a route attribute, and the route attribute of the BGP route comprises a next-hop attribute; and
the updating, by the first network device, a route attribute of the BGP route based on the one or more route attributes if route information of the BGP route matches the one or more target features comprises:
adding (208), by the first network device, the second extended community attribute to the BGP route if the address prefix of the BGP route matches the target address prefix.

5. The method according to claim 4, wherein the method further comprises:
receiving, by the first network device, a segment routing policy from the second network device, wherein the segment routing policy carries a color identifier, an endpoint identifier, and a segment list; and
using, by the first network device, the segment list to forward a packet reaching the target address prefix if the endpoint identifier carried in the segment routing policy matches the next-hop attribute in the BGP route and a path color indicated by the color identifier matches the path color indicated by the second extended community attribute in the BGP route.

6. The method according to claim 5, wherein the method further comprises:
recording, by the first network device, the segment list into a forwarding table corresponding to the target address prefix.

7. The method according to any one of claims 1 to 6, wherein the route policy further comprises a policy type field, the policy type field indicates a policy effectiveness occasion of the route policy, and the policy effectiveness occasion comprises one of the following manners: policy import effectiveness, policy export effectiveness, policy next-hop recursion effectiveness, policy forwarding entry generation effectiveness, and policy BGP route generation effectiveness; and the method further comprises:
detecting (104, 207), by the first network device based on the policy effectiveness occasion indicated by the policy type field, whether the route information of the BGP route matches the one or more target features

8. A route attribute update method, wherein the method comprises:
generating (101, 201), by a second network device, a message used for route policy distribution RPD, wherein the message comprises a route policy, the route policy comprises a match condition field and an action field, the match condition field carries one or more target features, the action field carries one or more route attributes, and the action field carries one or more of the following route attributes:
a community attribute, an extended community attribute, a large community attribute, a next-hop address, a local preference, a peer identifier, and an accumulative interior gateway protocol metric value; and
sending (102, 204), by the second network device, the message to a first network device, wherein the message indicates the first network device to update a route attribute of a border gateway protocol BGP route according to the route policy,
**characterized in that**
the action field carries at least the accumulative interior gateway protocol metric value.

9. The method according to claim 8, wherein the one or more target features comprise a target address prefix, and the one or more route attributes carried in the action field comprise a second extended community attribute indicating a path color; and the method further comprises:
sending (202), by the second network device, a segment routing policy to the first network device, wherein the segment routing policy carries a color identifier, an endpoint identifier, and a segment list, and the segment routing policy indicates the first network device, if determining that the endpoint identifier matches a next-hop attribute in the BGP route and a path color indicated by the color identifier matches the path color indicated by the second extended community attribute in the BGP route, to use the segment list to forward a packet reaching the target address prefix.

10. A first network device (300), wherein the first network device comprises:
a first receiving module (301), configured to receive a message used for route policy distribution RPD from a second network device, wherein the message comprises a route policy, the route policy comprises a match condition field and an action field, the match condition field carries one or more target features, and the action field carries one or more route attributes;
an obtaining module (302), configured to obtain a border gateway protocol BGP route;
an update module (303), configured to update a route attribute of the BGP route based on the one or more route attributes if route information of the BGP route matches the one or more target features, wherein
the action field carries one or more of the following route attributes:
a community attribute, an extended community attribute, a large community attribute, a next-hop address, a local preference, a peer identifier, and an accumulative interior gateway protocol metric value,
**characterized in that**
the action field carries at least the accumulative interior gateway protocol metric value.

11. The first network device according to claim 10, wherein
the first receiving module (301) is configured to receive the message sent by the second network device, wherein the message further comprises a first community attribute, and the first community attribute indicates not to advertise the message to another network device.

12. The first network device according to claim 10, wherein
the first receiving module (301) is configured to receive the message that is from the second network device and that is sent by a route reflector, wherein the message further comprises a first extended community attribute, and the first extended community attribute indicates an identifier of a target network device on which the route policy becomes effective; and
the first network device further comprises:
a processing module (304), configured to: if an identifier of the network device is different from the identifier that is of the target network device and that is indicated by the first extended community attribute, discard the message; or if an identifier of the network device matches the identifier that is of the target network device and that is indicated by the first extended community attribute, store the message.

13. The first network device according to any one of claims 10 to 12, wherein the route policy further comprises a policy type field, the policy type field indicates a policy effectiveness occasion of the route policy, and the policy effectiveness occasion comprises one of the following manners: policy import effectiveness, policy export effectiveness, policy next-hop recursion effectiveness, policy forwarding entry generation effectiveness, and policy BGP route generation effectiveness; and the first network device further comprises:
a detection module, configured to detect, on the policy effectiveness occasion indicated by the policy type field, whether the route information of the BGP route matches the one or more target features.

14. A second network device (400), wherein the second network device comprises:
a generation module (401), configured to generate a message used for route policy distribution RPD, wherein the message comprises a route policy, the route policy comprises a match condition field and an action field, the match condition field carries one or more target features, the action field carries one or more route attributes, and the action field carries one or more of the following route attributes:
a community attribute, an extended community attribute, a large community attribute, a next-hop address, a local preference, a peer identifier, and an accumulative interior gateway protocol metric value; and
a first sending module (402), configured to send the message to a first network device, wherein the message indicates the first network device to update a route attribute of a border gateway protocol BGP route according to the route policy,
**characterized in that**
the action field carries at least the accumulative interior gateway protocol metric value.

15. The second network device according to claim 14, wherein the one or more target features comprise a target address prefix, and the one or more route attributes carried in the action field comprise a second extended community attribute indicating a path color; and the second network device further comprises:
a second sending module (402), configured to send a segment routing policy to the first network device, wherein the segment routing policy carries a color identifier, an endpoint identifier, and a segment list, and the segment routing policy indicates the first network device, if determining that the endpoint identifier matches a next-hop attribute in the BGP route and a path color indicated by the color identifier matches the path color indicated by the second extended community attribute in the BGP route, to use the segment list to forward a packet reaching the target address prefix.

## Patentansprüche

1. Verfahren für eine Aktualisierung von Routenattributen, wobei das Verfahren umfasst:
Empfangen (102, 204), durch eine erste Netzwerkvorrichtung, einer Nachricht, die für eine Routenrichtlinienverteilung, RPD, verwendet wird, von einer zweiten Netzwerkvorrichtung, wobei die Nachricht eine Routenrichtlinie umfasst, die Routenrichtlinie ein Übereinstimmungsbedingungsfeld und ein Aktionsfeld umfasst, das Übereinstimmungsbedingungsfeld ein oder mehrere Zielmerkmale trägt und das Aktionsfeld ein oder mehrere Routenattribute trägt;
Erhalten (103, 206), durch die erste Netzwerkvorrichtung, einer Border-Gateway-Protocol(BGP)-Route; und
Aktualisieren (105, 208), durch die erste Netzwerkvorrichtung, eines Routenattributs der BGP-Route auf der Grundlage des einen oder der mehreren Routenattribute, wenn Routeninformationen der BGP-Route mit dem einen oder den mehreren Zielmerkmalen übereinstimmen, wobei
das Aktionsfeld eines oder mehrere der folgenden Routenattribute trägt:
ein Community-Attribut, ein Extended-Community-Attribut, ein Large-Community-Attribut, eine Next-Hop-Adresse, eine lokale Präferenz, eine Peer-Kennung und einen Accumulative Interior Gateway Protocol-Metrikwert,
**dadurch gekennzeichnet, dass**
das Aktionsfeld mindestens den Accumulative Interior Gateway Protocol-Metrikwert trägt.

2. Verfahren nach Anspruch 1, wobei das Empfangen (102), durch eine erste Netzwerkvorrichtung, einer Nachricht von einer zweiten Netzwerkvorrichtung umfasst:
Empfangen, durch die erste Netzwerkvorrichtung, der Nachricht, die durch die zweite Netzwerkvorrichtung gesendet wurde, wobei die Nachricht ferner ein erstes Community-Attribut umfasst und das erste Community-Attribut angibt, dass die Nachricht einer anderen Netzwerkvorrichtung nicht angekündigt werden soll.

3. Verfahren nach Anspruch 1, wobei das Empfangen (102), durch eine erste Netzwerkvorrichtung, einer Nachricht von einer zweiten Netzwerkvorrichtung umfasst:
Empfangen, durch die erste Netzwerkvorrichtung, der Nachricht, die von der zweiten Netzwerkvorrichtung stammt und die durch einen Routenreflektor gesendet wird, wobei die Nachricht ferner ein erstes Extended-Community-Attribut umfasst und das erste Extended-Community-Attribut eine Kennung einer Zielnetzwerkvorrichtung angibt, auf der die Routenrichtlinie wirksam wird; und
wobei das Verfahren ferner umfasst:
wenn eine Kennung der ersten Netzwerkvorrichtung sich von der Kennung unterscheidet, die von der Zielnetzwerkvorrichtung stammt und die durch das erste Extended-Community-Attribut angegeben wird, Verwerfen, durch die erste Netzwerkvorrichtung, der Nachricht; oder wenn eine Kennung der ersten Netzwerkvorrichtung mit der Kennung übereinstimmt, die von der Zielnetzwerkvorrichtung stammt und die durch das erste Extended-Community-Attribut angegeben wird, Speichern, durch die erste Netzwerkvorrichtung, der Nachricht.

4. Verfahren nach einem der Ansprüche 1 bis 3, wobei das eine oder die mehreren Zielmerkmale ein Zieladressenpräfix umfassen, das eine oder die mehreren in dem Aktionsfeld getragenen Routenattribute ein zweites Extended-Community-Attribut umfassen, das eine Pfadfarbe angibt, die BGP-Route ein Adressenpräfix und ein Routenattribut umfasst und das Routenattribut der BGP-Route ein Next-Hop-Attribut umfasst; und
das Aktualisieren, durch die erste Netzwerkvorrichtung, eines Routenattributs der BGP-Route auf der Grundlage des einen oder der mehreren Routenattribute, wenn Routeninformationen der BGP-Route mit dem einen oder den mehreren Zielmerkmalen übereinstimmen, umfasst:
Hinzufügen (208), durch die erste Netzwerkvorrichtung, des zweiten Extended-Community-Attributs zu der BGP-Route, wenn das Adresspräfix der BGP-Route mit dem Zieladresspräfix übereinstimmt.

5. Verfahren nach Anspruch 4, wobei das Verfahren ferner umfasst:
Empfangen, durch die erste Netzwerkvorrichtung, einer Segment-Routing-Richtlinie von der zweiten Netzwerkvorrichtung, wobei die Segment-Routing-Richtlinie eine Farbkennung, eine Endpunktkennung und eine Segmentliste trägt; und
Verwenden, durch die erste Netzwerkvorrichtung, der Segmentliste, um ein Paket weiterzuleiten, das das Zieladressenpräfix erreicht, wenn die in der Segment-Routing-Richtlinie getragene Endpunktkennung mit dem Next-Hop-Attribut in der BGP-Route übereinstimmt und eine durch die Farbkennung angegebene Pfadfarbe mit der durch das zweite Extended-Community-Attribut in der BGP-Route angegebenen Pfadfarbe übereinstimmt.

6. Verfahren nach Anspruch 5, wobei das Verfahren ferner umfasst:
Erfassen, durch die erste Netzwerkvorrichtung, der Segmentliste in eine Weiterleitungstabelle, die dem Zieladressenpräfix entspricht.

7. Verfahren nach einem der Ansprüche 1 bis 6, wobei die Routenrichtlinie ferner ein Richtlinientypenfeld umfasst, wobei das Richtlinientypenfeld einen Richtlinienwirksamkeitsanlass der Routenrichtlinie angibt und der Richtlinienwirksamkeitsanlass eine der folgenden Arten umfasst:
Richtlinienimportwirksamkeit, Richtlinienexporfiniirksamkeit, Richtlinien-Next-Hop-Rekursionswirksamkeit, Wirksamkeit der Richtlinienweiterleitungseintragserzeugung und Wirksamkeit der Richtlinien-BGP-Routenerzeugung; und das Verfahren ferner umfasst:
Erkennen (104, 207), durch die erste Netzwerkvorrichtung auf der Grundlage des durch das Richtlinientypenfeld angegebenen Richtlinienwirksamkeitsanlasses, ob die Routeninformationen der BGP-Route mit dem einen oder den mehreren Zielmerkmale) übereinstimmen.

8. Verfahren für die Aktualisierung von Routenattributen, wobei das Verfahren umfasst:
Erzeugen (101, 201), durch eine zweite Netzwerkvorrichtung, einer Nachricht, die für die Routenrichtlinienverteilung, RPD, verwendet wird, wobei die Nachricht eine Routenrichtlinie umfasst, die Routenrichtlinie ein Übereinstimmungsbedingungsfeld und ein Aktionsfeld umfasst, das Übereinstimmungsbedingungsfeld ein oder mehrere Zielmerkmale trägt, das Aktionsfeld ein oder mehrere Routenattribute trägt und das Aktionsfeld eines oder mehrere der folgenden Routenattribute trägt:
ein Community-Attribut, ein Extended-Community-Attribut, ein Large-Community-Attribut, eine Next-Hop-Adresse, eine lokale Präferenz, eine Peer-Kennung und einen Accumulative Interior Gateway Protocol-Metrikwert; und
Senden (102, 204), durch die zweite Netzwerkvorrichtung, der Nachricht an eine erste Netzwerkvorrichtung, wobei die Nachricht die erste Netzwerkvorrichtung angibt, um ein Routenattribut einer Border-Gateway-Protocol(BGP)-Route, gemäß der Routenrichtlinie zu aktualisieren,
**dadurch gekennzeichnet, dass**
das Aktionsfeld mindestens den Accumulative Interior Gateway Protocol-Metrikwert trägt.

9. Verfahren nach Anspruch 8, wobei das eine oder die mehreren Zielmerkmale ein Zieladressenpräfix umfassen und das eine oder die mehreren in dem Aktionsfeld getragenen Routenattribute ein zweites Extended-Community-Attribut umfassen, das eine Pfadfarbe angibt; und das Verfahren ferner umfasst:
Senden (202), durch die zweite Netzwerkvorrichtung, einer Segment-Routing-Richtlinie an die erste Netzwerkvorrichtung, wobei die Segment-Routing-Richtlinie eine Farbkennung, eine Endpunktkennung und eine Segmentliste trägt und die Segment-Routing-Richtlinie die erste Netzwerkvorrichtung angibt, wenn bestimmt wird, dass die Endpunktkennung mit einem Next-Hop-Attribut in der BGP-Route übereinstimmt und eine durch die Farbkennung angegebene Pfadfarbe mit der durch das zweite Extended-Community-Attribut in der BGP-Route angegebenen Pfadfarbe übereinstimmt, um die Segmentliste zu verwenden, um ein Paket weiterzuleiten, das das Zieladressenpräfix erreicht.

10. Erste Netzwerkvorrichtung (300), wobei die erste Netzwerkvorrichtung umfasst:
ein erstes Empfangsmodul (301), das konfiguriert ist, um eine Nachricht , die für die Routenrichtlinienverteilung, RPD, verwendet wird, von einer zweiten Netzwerkvorrichtung zu empfangen, wobei die Nachricht eine Routenrichtlinie umfasst, die Routenrichtlinie ein Übereinstimmungsbedingungsfeld und ein Aktionsfeld umfasst, das Übereinstimmungsbedingungsfeld ein oder mehrere Zielmerkmale trägt und das Aktionsfeld ein oder mehrere Routenattribute trägt;
ein Erhaltungsmodul (302), das konfiguriert ist, um eine Border-Gateway-Protocol(BGP)-Route zu erhalten;
ein Aktualisierungsmodul (303), das konfiguriert ist, um ein Routenattribut der BGP-Route auf der Grundlage des einen oder der mehreren Routenattribute zu aktualisieren, wenn Routeninformationen der BGP-Route mit dem einen oder den mehreren Zielmerkmalen übereinstimmen, wobei
das Aktionsfeld eines oder mehrere der folgenden Routenattribute trägt:
ein Community-Attribut, ein Extended-Community-Attribut, ein Large-Community-Attribut, eine Next-Hop-Adresse, eine lokale Präferenz, eine Peer-Kennung und einen Accumulative Interior Gateway Protocol-Metrikwert,
**dadurch gekennzeichnet, dass**
das Aktionsfeld mindestens den Accumulative Interior Gateway Protocol-Metrikwert trägt.

11. Erste Netzwerkvorrichtung nach Anspruch 10, wobei
das erste Empfangsmodul (301) konfiguriert ist, um die durch die zweite Netzwerkvorrichtung gesendete Nachricht zu empfangen, wobei die Nachricht ferner ein erstes Community-Attribut umfasst und das erste Community-Attribut angibt, dass die Nachricht einer anderen Netzwerkvorrichtung nicht angekündigt werden soll.

12. Erste Netzwerkvorrichtung nach Anspruch 10, wobei
das erste Empfangsmodul (301) konfiguriert ist, um die Nachricht zu empfangen, die von der zweiten Netzwerkvorrichtung stammt und die durch einen Routenreflektor gesendet wird, wobei die Nachricht ferner ein erstes Extended-Community-Attribut umfasst und das erste Extended-Community-Attribut eine Kennung einer Zielnetzwerkvorrichtung angibt, auf der die Routenrichtlinie wirksam wird; und die erste Netzwerkvorrichtung ferner umfasst:
ein Verarbeitungsmodul (304), das konfiguriert ist zum: wenn eine Kennung der Netzwerkvorrichtung sich von der Kennung unterscheidet, die von der Zielnetzwerkvorrichtung stammt und die durch das erste Extended-Community-Attribut angegeben wird, Verwerfen der Nachricht; oder, wenn eine Kennung der Netzwerkvorrichtung mit der Kennung übereinstimmt, die von der Zielnetzwerkvorrichtung stammt und die durch das erste Extended-Community-Attribut angegeben wird, Speichern der Nachricht.

13. Erste Netzwerkvorrichtung nach einem der Ansprüche 10 bis 12, wobei die Routenrichtlinie ferner ein Richtlinientypenfeld umfasst, wobei das Richtlinientypenfeld einen Richtlinienwirksamkeitsanlass der Routenrichtlinie angibt und der Richtlinienwirksamkeitsanlass eine der folgenden Arten umfasst:
Richtlinienimportwirksamkeit, Richtlinienexporfiniirksamkeit, Richtlinien-Next-Hop-Rekursionswirksamkeit, Wirksamkeit der Richtlinienweiterleitungseintragserzeugung und Wirksamkeit der Richtlinien-BGP-Routenerzeugung; wobei die erste Netzwerkvorrichtung ferner umfasst:
ein Erkennungsmodul, das konfiguriert ist, um auf der Grundlage des durch das Richtlinientypenfeld angegebenen Richtlinienwirksamkeitsanlasses zu erkennen, ob die Routeninformationen der BGP-Route mit dem einen oder den mehreren Zielmerkmalen übereinstimmen.

14. Zweite Netzwerkvorrichtung (400), wobei die zweite Netzwerkvorrichtung umfasst:
ein Erzeugungsmodul (401), das konfiguriert ist, um eine Nachricht zu erzeugen, die für die Routenrichtlinienverteilung, RPD, verwendet wird, wobei die Nachricht eine Routenrichtlinie umfasst, die Routenrichtlinie ein Übereinstimmungsbedingungsfeld und ein Aktionsfeld umfasst, das Übereinstimmungsbedingungsfeld ein oder mehrere Zielmerkmale trägt, das Aktionsfeld ein oder mehrere Routenattribute trägt und das Aktionsfeld eines oder mehrere der folgenden Routenattribute trägt:
ein Community-Attribut, ein Extended-Community-Attribut, ein Large-Community-Attribut, eine Next-Hop-Adresse, eine lokale Präferenz, eine Peer-Kennung und einen Accumulative Interior Gateway Protocol-Metrikwert; und
ein erstes Sendemodul (402), das konfiguriert ist, um die Nachricht an eine erste Netzwerkvorrichtung zu senden, wobei die Nachricht die erste Netzwerkvorrichtung angibt, um ein Routenattribut einer Border-Gateway-Protocol(BGP)-Route, gemäß der Routenrichtlinie zu aktualisieren,
**dadurch gekennzeichnet, dass**
das Aktionsfeld mindestens den Accumulative Interior Gateway Protocol-Metrikwert trägt.

15. Zweite Netzwerkvorrichtung nach Anspruch 14, wobei das eine oder die mehreren Zielmerkmale ein Zieladressenpräfix umfassen und das eine oder die mehreren in dem Aktionsfeld getragenen Routenattribute ein zweites Extended-Community-Attribut umfassen, das eine Pfadfarbe angibt; und die zweite Netzwerkvorrichtung ferner umfasst:
ein zweites Sendemodul (402), das konfiguriert ist, um eine Segment-Routing-Richtlinie an die erste Netzwerkvorrichtung zu senden, wobei die Segment-Routing-Richtlinie eine Farbkennung, eine Endpunktkennung und eine Segmentliste trägt und die Segment-Routing-Richtlinie die erste Netzwerkvorrichtung angibt, wenn bestimmt wird, dass die Endpunktkennung mit einem Next-Hop-Attribut in der BGP-Route übereinstimmt und eine durch die Farbkennung angegebene Pfadfarbe mit der durch das zweite Extended-Community-Attribut in der BGP-Route angegebenen Pfadfarbe übereinstimmt, um die Segmentliste zu verwenden, um ein Paket weiterzuleiten, das das Zieladressenpräfix erreicht.

## Revendications

1. Procédé de mise à jour d'attribut de route, dans lequel le procédé comprend :
la réception (102, 204), par un premier dispositif de réseau, d'un message utilisé pour une distribution de politique de route, RPD, provenant d'un second dispositif de réseau, dans lequel le message comprend une politique de route, la politique de route comprend un champ de condition de correspondance et un champ d'action, le champ de condition de correspondance porte une ou plusieurs caractéristiques cibles, et le champ d'action porte un ou plusieurs attributs de route ;
l'obtention (103, 206), par le premier dispositif de réseau, d'une route de protocole de passerelle frontière, BGP ; et
la mise à jour (105, 208), par le premier dispositif de réseau, d'un attribut de route de la route BGP sur la base du ou des attributs de route si des informations de route de la route BGP correspondent à la ou aux caractéristiques cibles, dans lequel le champ d'action porte un ou plusieurs des attributs de route suivants :
un attribut de communauté, un attribut de communauté étendue, un attribut de grande communauté, une adresse de saut suivant, une préférence locale, un identifiant de pair, et une valeur métrique de protocole de passerelle intérieure cumulée,
**caractérisé en ce que**
le champ d'action porte au moins la valeur métrique de protocole de passerelle intérieure cumulée.

2. Procédé selon la revendication 1, dans lequel la réception (102), par un premier dispositif de réseau, d'un message provenant d'un second dispositif de réseau comprend :
la réception, par le premier dispositif de réseau, du message envoyé par le second dispositif de réseau, dans lequel le message comprend en outre un premier attribut de communauté, et le premier attribut de communauté indique de ne pas annoncer le message à un autre dispositif de réseau.

3. Procédé selon la revendication 1, dans lequel la réception (102), par un premier dispositif de réseau, d'un message provenant d'un second dispositif de réseau comprend :
la réception, par le premier dispositif de réseau, du message qui provient du second dispositif de réseau et qui est envoyé par un réflecteur de route, dans lequel le message comprend en outre un premier attribut de communauté étendue, et le premier attribut de communauté étendue indique un identifiant d'un dispositif de réseau cible sur lequel la politique de route devient effective ; et
le procédé comprend en outre :
si un identifiant du premier dispositif de réseau est différent de l'identifiant qui provient du dispositif de réseau cible et qui est indiqué par le premier attribut de communauté étendue, le rejet du message par le premier dispositif de réseau ; ou si un identifiant du premier dispositif de réseau correspond à l'identifiant qui provient du dispositif de réseau cible et qui est indiqué par le premier attribut de communauté étendue, le stockage du message par le premier dispositif de réseau.

4. Procédé selon l'une quelconque des revendications 1 à 3, dans lequel la ou les caractéristiques cibles comprennent un préfixe d'adresse cible, le ou les attributs de route portés dans le champ d'action comprennent un second attribut de communauté étendue indiquant une couleur de chemin, la route BGP comprend un préfixe d'adresse et un attribut de route, et l'attribut de route de la route BGP comprend un attribut de saut suivant ; et
la mise à jour, par le premier dispositif de réseau, d'un attribut de route de la route BGP sur la base du ou des attributs de route si des informations de route de la route BGP correspondent à la ou aux caractéristiques cibles, comprend :
l'ajout (208), par le premier dispositif de réseau, du second attribut de communauté étendue à la route BGP si le préfixe d'adresse de la route BGP correspond au préfixe d'adresse cible.

5. Procédé selon la revendication 4, dans lequel le procédé comprend en outre :
la réception, par le premier dispositif de réseau, d'une politique de routage de segment provenant du second dispositif de réseau, dans lequel la politique de routage de segment porte un identifiant de couleur, un identifiant de point d'extrémité, et une liste de segments ; et
l'utilisation, par le premier dispositif de réseau, de la liste de segments pour acheminer un paquet atteignant le préfixe d'adresse cible si l'identifiant de point d'extrémité porté dans la politique de routage de segment correspond à l'attribut de saut suivant dans la route BGP et si une couleur de chemin indiquée par l'identifiant de couleur correspond à la couleur de chemin indiquée par le second attribut de communauté étendue dans la route BGP.

6. Procédé selon la revendication 5, dans lequel le procédé comprend en outre :
l'enregistrement, par le premier dispositif de réseau, de la liste de segments dans une table d'acheminement correspondant au préfixe d'adresse cible.

7. Procédé selon l'une quelconque des revendications 1 à 6, dans lequel la politique de route comprend en outre un champ de type de politique, le champ de type de politique indique une occasion d'efficacité de politique de la politique de route, et l'occasion d'efficacité de politique comprend l'une des manières suivantes : efficacité d'importation de politique, efficacité d'exportation de politique, efficacité de récursion de saut suivant de politique, efficacité de génération d'entrée d'acheminement de politique, et efficacité de génération de route BGP de politique ; et le procédé comprend en outre :
le fait de détecter (104, 207), par le premier dispositif de réseau sur la base de l'occasion d'efficacité de politique indiquée par le champ de type de politique, si les informations de route de la route BGP correspondent à la ou aux caractéristiques cibles

8. Procédé de mise à jour d'attribut de route, dans lequel le procédé comprend :
la génération (101, 201), par un second dispositif de réseau, d'un message utilisé pour une distribution de politique de route RPD, dans lequel le message comprend une politique de route, la politique de route comprend un champ de condition de correspondance et un champ d'action, le champ de condition de correspondance porte une ou plusieurs caractéristiques cibles, le champ d'action porte un ou plusieurs attributs de route, et le champ d'action porte un ou plusieurs des attributs de route suivants :
un attribut de communauté, un attribut de communauté étendue, un attribut de grande communauté, une adresse de saut suivant, une préférence locale, un identifiant de pair, et une valeur métrique de protocole de passerelle intérieure cumulée ; et
l'envoi (102, 204), par le second dispositif de réseau, du message à un premier dispositif de réseau, dans lequel le message indique au premier dispositif de réseau de mettre à jour un attribut de route d'une route de protocole de passerelle frontière BGP conformément à la politique de route,
**caractérisé en ce que**
le champ d'action porte au moins la valeur métrique de protocole de passerelle intérieure cumulée.

9. Procédé selon la revendication 8, dans lequel la ou les caractéristiques cibles comprennent un préfixe d'adresse cible, et le ou les attributs de route portés dans le champ d'action comprennent un second attribut de communauté étendue indiquant une couleur de chemin ; et le procédé comprend en outre :
l'envoi (202), par le second dispositif de réseau, d'une politique de routage de segment au premier dispositif de réseau, dans lequel la politique de routage de segment porte un identifiant de couleur, un identifiant de point d'extrémité, et une liste de segments, et la politique de routage de segment indique au premier dispositif de réseau, s'il est déterminé que l'identifiant de point d'extrémité correspond à un attribut de saut suivant dans la route BGP et qu'une couleur de chemin indiquée par l'identifiant de couleur correspond à la couleur de chemin indiquée par le second attribut de communauté étendue dans la route BGP, d'utiliser la liste de segments pour acheminer un paquet atteignant le préfixe d'adresse cible.

10. Premier dispositif de réseau (300), dans lequel le premier dispositif de réseau comprend :
un premier module de réception (301), configuré pour recevoir un message utilisé pour une distribution de politique de route RPD provenant d'un second dispositif de réseau, dans lequel le message comprend une politique de route, la politique de route comprend un champ de condition de correspondance et un champ d'action, le champ de condition de correspondance porte une ou plusieurs caractéristiques cibles, et le champ d'action porte un ou plusieurs attributs de route ;
un module d'obtention (302), configuré pour obtenir une route de protocole de passerelle frontière BGP ;
un module de mise à jour (303), configuré pour mettre à jour un attribut de route de la route BGP sur la base du ou des attributs de route si des informations de route de la route BGP correspondent à la ou aux caractéristiques cibles, dans lequel le champ d'action porte un ou plusieurs des attributs de route suivants :
un attribut de communauté, un attribut de communauté étendue, un attribut de grande communauté, une adresse de saut suivant, une préférence locale, un identifiant de pair, et une valeur métrique de protocole de passerelle intérieure cumulée,
**caractérisé en ce que**
le champ d'action porte au moins la valeur métrique de protocole de passerelle intérieure cumulée.

11. Premier dispositif de réseau selon la revendication 10, dans lequel
le premier module de réception (301) est configuré pour recevoir le message envoyé par le second dispositif de réseau, dans lequel le message comprend en outre un premier attribut de communauté, et le premier attribut de communauté indique de ne pas annoncer le message à un autre dispositif de réseau.

12. Premier dispositif de réseau selon la revendication 10, dans lequel
le premier module de réception (301) est configuré pour recevoir le message qui provient du second dispositif de réseau et qui est envoyé par un réflecteur de route, dans lequel le message comprend en outre un premier attribut de communauté étendue, et le premier attribut de communauté étendue indique un identifiant d'un dispositif de réseau cible sur lequel la politique de route devient effective ; et
le premier dispositif de réseau comprend en outre :
un module de traitement (304), configuré pour : si un identifiant du dispositif de réseau est différent de l'identifiant qui provient du dispositif de réseau cible et qui est indiqué par le premier attribut de communauté étendue, rejeter le message ; ou si un identifiant du dispositif de réseau correspond à l'identifiant qui provient du dispositif de réseau cible et qui est indiqué par le premier attribut de communauté étendue, stocker le message.

13. Premier dispositif de réseau selon l'une quelconque des revendications 10 à 12, dans lequel la politique de route comprend en outre un champ de type de politique, le champ de type de politique indique une occasion d'efficacité de politique de la politique de route, et l'occasion d'efficacité de politique comprend l'une des manières suivantes : efficacité d'importation de politique, efficacité d'exportation de politique, efficacité de récursion de saut suivant de politique, efficacité de génération d'entrée d'acheminement de politique, et efficacité de génération de route BGP de politique ; et le premier dispositif de réseau comprend en outre :
un module de détection, configuré pour détecter, sur l'occasion d'efficacité de politique indiquée par le champ de type de politique, si les informations de route de la route BGP correspondent à la ou aux caractéristiques cibles.

14. Second dispositif de réseau (400), dans lequel le second dispositif de réseau comprend :
un module de génération (401), configuré pour générer un message utilisé pour une distribution de politique de route RPD, dans lequel le message comprend une politique de route, la politique de route comprend un champ de condition de correspondance et un champ d'action, le champ de condition de correspondance porte une ou plusieurs caractéristiques cibles, le champ d'action porte un ou plusieurs attributs de route, et le champ d'action porte un ou plusieurs des attributs de route suivants :
un attribut de communauté, un attribut de communauté étendue, un attribut de grande communauté, une adresse de saut suivant, une préférence locale, un identifiant de pair, et une valeur métrique de protocole de passerelle intérieure cumulée ; et
un premier module d'envoi (402), configuré pour envoyer le message à un premier dispositif de réseau, dans lequel le message indique au premier dispositif de réseau de mettre à jour un attribut de route d'une route de protocole de passerelle frontière BGP conformément à la politique de route,
**caractérisé en ce que**
le champ d'action porte au moins la valeur métrique de protocole de passerelle intérieure cumulée.

15. Second dispositif de réseau selon la revendication 14, dans lequel la ou les caractéristiques cibles comprennent un préfixe d'adresse cible, et le ou les attributs de route portés dans le champ d'action comprennent un second attribut de communauté étendue indiquant une couleur de chemin ; et le second dispositif de réseau comprend en outre :
un second module d'envoi (402), configuré pour envoyer une politique de routage de segment au premier dispositif de réseau, dans lequel la politique de routage de segment porte un identifiant de couleur, un identifiant de point d'extrémité, et une liste de segments, et la politique de routage de segment indique au premier dispositif de réseau, s'il est déterminé que l'identifiant de point d'extrémité correspond à un attribut de saut suivant dans la route BGP et qu'une couleur de chemin indiquée par l'identifiant de couleur correspond à la couleur de chemin indiquée par le second attribut de communauté étendue dans la route BGP, d'utiliser la liste de segments pour acheminer un paquet atteignant le préfixe d'adresse cible.
